# EUROPEAN PATENT APPLICATION

(11) **EP 4 770 250 A1**
(43) Date of publication of application: **01.07.2026**
(21) Application number: 24864534.3
(22) Date of filing: 05.09.2024
(51) Int. Cl.: H04W 72/542

(54) **SENSING METHOD AND COMMUNICATION APPARATUS**

(30) Priority: 14.09.2023 CN 202311194782
(71) Applicant: HUAWEI TECHNOLOGIES CO., LTD., Shenzhen 518129 (CN)
(72) Inventor: DU, Rui, Shenzhen, Guangdong 518129 (CN); TANG, Zhuqing, Shenzhen, Guangdong 518129 (CN); HUANG, Lei, Shenzhen, Guangdong 518129 (CN); HAN, Xiao, Shenzhen, Guangdong 518129 (CN)
(74) Representative: Goddar, Heinz J.
(86) International application number: PCT/CN2024/117176
(87) International publication number: WO 2025/055814

(57) **Abstract**

This application provides a sensing method and a communication apparatus, which are applied to a wireless local area network system supporting IEEE 802.11bf, or may be applied to a wireless local area network system supporting IEEE 802.11ax, IEEE 802.11be, or another IEEE 802.11 series protocol, to optimize a time interaction problem in sensing measurement session termination. The method includes: A first apparatus receives first indication information from a second apparatus, where the first indication information indicates that the second apparatus requests the first apparatus not to send a first message to the second apparatus within first duration after a first sensing measurement session is terminated, or indicates that the second apparatus does not send a first message to the first apparatus within first duration after a first sensing measurement session is terminated, or indicates that the second apparatus no longer participates in a sensing measurement session after a first sensing measurement session is terminated, and the first message is used to request to establish a second sensing measurement session.

## Description

### CROSS-REFERENCE TO RELATED APPLICATIONS

This application claims priority to Chinese Patent Application No. 202311194782.2, filed with the China National Intellectual Property Administration on September 14, 2023 and entitled "SENSING METHOD AND COMMUNICATION APPARATUS", which is incorporated herein by reference in its entirety.

### TECHNICAL FIELD

This application relates to the field of wireless local area network (wireless local area network, WLAN) technologies, and in particular, to a sensing method and a communication apparatus.

### BACKGROUND

In daily life, a signal sent by a wireless fidelity (wireless fidelity, Wi-Fi) device is usually received after being reflected, diffracted, and scattered by various obstacles. Through analysis on a wireless signal such as channel state information (channel state information, CSI) affected by various obstacles, a surrounding environment can be inferred and sensed, and therefore a wireless local area network (wireless local area network, WLAN) sensing technology is derived.

In the institute of electrical and electronics engineers (institute of electrical and electronics engineers, IEEE) 802.11 series of standards, sensing is processed as a session. For example, a sensing initiator may send a sensing measurement request (sensing measurement request) frame to request a related device (such as a sensing responder) to participate in a sensing measurement session; and the sensing responder may send a sensing measurement response (sensing measurement response) frame to respond to the sensing measurement session sent by the sensing initiator. After establishment of the sensing measurement session is completed, the sensing initiator and the sensing responder enter a sensing measurement exchange (sensing measurement exchange) phase to perform sensing measurement. When sensing measurement does not need to be continued, the sensing initiator or the sensing responder may consider termination of the established sensing measurement session. In a current standard, for example, IEEE 802.11bf, a solution design of participating in a next sensing measurement session after a sensing measurement session is terminated is not flexible enough.

### SUMMARY

Embodiments of this application provide a sensing method and a communication apparatus, to optimize a time interaction problem in sensing measurement session termination, so that time for a sensing initiator or a sensing responder to participate in a next sensing measurement session after a sensing measurement session is terminated is more flexible.

According to a first aspect, this application provides a sensing method. The method may be performed by a first apparatus, or may be performed by a component (for example, a chip) in the first apparatus. This is not limited. An example in which the first apparatus is an execution body is used. The method includes: The first apparatus receives first indication information from a second apparatus, where the first indication information indicates that the second apparatus requests the first apparatus not to send a first message to the second apparatus within first duration after a first sensing measurement session is terminated, or the first indication information indicates that the second apparatus does not send a first message to the first apparatus within first duration after a first sensing measurement session is terminated, or the first indication information indicates that the second apparatus no longer participates in a sensing measurement session after a first sensing measurement session is terminated, the first sensing measurement session is a sensing measurement session between the first apparatus and the second apparatus, and the first message is used to request to establish a second sensing measurement session.

According to a second aspect, this application provides a sensing method. The method may be performed by a second apparatus, or may be performed by a component (for example, a chip) in the second apparatus. This is not limited. An example in which the second apparatus is an execution body is used. The method includes: The second apparatus sends first indication information to a first apparatus, where the first indication information indicates that the second apparatus requests the first apparatus not to send a first message to the second apparatus within first duration after a first sensing measurement session is terminated, or the first indication information indicates that the second apparatus does not send a first message to the first apparatus within first duration after a first sensing measurement session is terminated, or the first indication information indicates that the second apparatus no longer participates in a sensing measurement session after a first sensing measurement session is terminated, the first sensing measurement session is a sensing measurement session between the first apparatus and the second apparatus, and the first message is used to request to establish a second sensing measurement session.

According to the method provided in this application, the second apparatus sends the first indication information to the first apparatus, and the first indication information indicates that the second apparatus requests the first apparatus not to send the first message to the second apparatus within the first duration after the first sensing measurement session is terminated. This optimizes a time interaction problem in sensing measurement session termination, so that time for participating in a next sensing measurement session after the first sensing measurement session is terminated is more flexible. For example, the first apparatus is a sensing initiator, and the second apparatus is a sensing responder. The sensing responder may flexibly adjust, according to a service requirement of the sensing responder or the like, time for re-participating in establishing a sensing measurement session. The sensing initiator can determine an intent of the sensing responder by using the first indication information, thereby avoiding resource consumption caused because the sensing initiator does not know the intent of the sensing responder and initiates a sensing measurement session to the sensing responder within the first duration after the first sensing measurement session is terminated.

Alternatively, the first indication information indicates that the second apparatus does not send the first message to the first apparatus within the first duration after the first sensing measurement session is terminated. This optimizes a time interaction problem in sensing measurement session termination, so that time for participating in a next sensing measurement session after the first sensing measurement session is terminated is more flexible. For example, the first apparatus is a sensing responder, and the second apparatus is a sensing initiator. The sensing initiator may flexibly adjust time for establishing a sensing measurement session with each sensing responder. This can increase fairness of initiating a sensing measurement session by the sensing initiator in a communication environment in which there are a plurality of sensing responders. The sensing responder can determine a sensing initiation intent by using the first indication information, to respond to a sensing measurement session establishment request of another sensing initiator.

Alternatively, the first indication information indicates that the second apparatus no longer participates in a sensing measurement session after the first sensing measurement session is terminated. This optimizes a time interaction problem in sensing measurement session termination, to more flexibly indicate that the second apparatus no longer participates in a subsequent sensing measurement session after the first sensing measurement session is terminated, thereby reducing resource consumption caused by signaling exchange in a subsequent sensing measurement session establishment process. For example, the first apparatus is a sensing initiator, and the second apparatus is a sensing responder. The sensing responder may no longer participate in a sensing measurement session according to a situation of the sensing responder; and based on the first indication information, the sensing initiator may no longer send the first message to the sensing responder after the first sensing measurement session is terminated, thereby avoiding resource consumption caused because the sensing initiator does not know that the sensing responder no longer participates in a sensing measurement session and still sends the first message to the sensing responder.

Based on the first aspect or the second aspect, in a possible implementation, the first indication information may be carried in a second message.

The second message may be used to request to terminate the first sensing measurement session. For example, the second message may be a sensing measurement termination frame in wireless local area network sensing, or the second message may be a directional multi-gigabit sensing measurement termination frame in directional multi-gigabit sensing.

Alternatively, the second message may be used to respond to an establishment request for the first sensing measurement session. For example, the second message may be a sensing measurement response frame in wireless local area network sensing, or the second message may be a directional multi-gigabit sensing measurement response frame in directional multi-gigabit sensing.

Alternatively, the second message may be used to request to establish the first sensing measurement session. For example, the second message may be a sensing measurement request frame in wireless local area network sensing, or the second message may be a directional multi-gigabit sensing measurement request frame in directional multi-gigabit sensing.

According to the foregoing implementation, the second apparatus may send the first indication information to the first apparatus in a procedure of terminating the first sensing measurement session, or the second apparatus may send the first indication information to the first apparatus in a procedure of establishing the first sensing measurement session. This implementation is flexible.

Based on the first aspect or the second aspect, in a possible implementation, the second message may further include second indication information, and the second indication information may indicate that the second message includes the first indication information. For example, the second message may further include a measurement session termination control field, and the second indication information is carried in the measurement session termination control field. For another example, the second message may further include a directional multi-gigabit sensing measurement session termination control field, and the second indication information is carried in the directional multi-gigabit sensing measurement session termination control field.

According to the foregoing implementation, the first apparatus may determine, by parsing the second indication information, whether the second message includes the first indication information.

Based on the first aspect or the second aspect, in a possible implementation, the second message may further include a status code and a first field, the status code is success, or the status code is rejected with suggestion, and the first field may indicate the first duration. When the status code is declined, the first indication information may indicate that the second apparatus requests the first apparatus not to send the first message to the second apparatus within the first duration after establishment of the first sensing measurement session is declined. When the status code is success, or the status code is rejected with suggestion, the first indication information may indicate that the second apparatus requests the first apparatus not to send the first message to the second apparatus within the first duration after the first sensing measurement session is terminated. Optionally, the first field may be a decline duration indication field, or the first field may be a duration indication field.

Based on the first aspect or the second aspect, in a possible implementation, if the first indication information indicates that the second apparatus requests the first apparatus not to send the first message to the second apparatus within the first duration after the first sensing measurement session is terminated, the second message may further include a second field, where a value of the second field includes a first value and a second value. The first value indicates that the second apparatus no longer participates in a sensing measurement session after the first sensing measurement session is terminated, and the second value indicates that the second field is reserved.

Based on the first aspect or the second aspect, in a possible implementation, if the first indication information indicates that the second apparatus requests the first apparatus not to send the first message to the second apparatus within the first duration after the first sensing measurement session is terminated, the first duration may be infinite. In other words, the first indication information indicates that the second apparatus no longer participates in a sensing measurement session after the first sensing measurement session is terminated.

Based on the first aspect or the second aspect, in a possible implementation, the first apparatus is a sensing initiator, and the second apparatus is a sensing responder. In this case, the first indication information indicates that the second apparatus requests the first apparatus not to send the first message to the second apparatus within the first duration after the first sensing measurement session is terminated, or the first indication information indicates that the second apparatus no longer participates in a sensing measurement session after the first sensing measurement session is terminated. Alternatively, the first apparatus is a sensing responder, and the second apparatus is a sensing initiator. In this case, the first indication information indicates that the second apparatus does not send the first message to the first apparatus within the first duration after the first sensing measurement session is terminated.

According to a third aspect, this application provides a sensing method. The method may be performed by a first apparatus, or may be performed by a component (for example, a chip) in the first apparatus. This is not limited. An example in which the first apparatus is an execution body is used. The method includes: The first apparatus receives third indication information from a second apparatus, where the third indication information indicates that the second apparatus requests the first apparatus not to send a third message to the second apparatus within second duration after a first sensing by proxy procedure is terminated, or the third indication information indicates that the second apparatus does not send a third message to the first apparatus within second duration after a first sensing by proxy procedure is terminated, or the third indication information indicates that the second apparatus no longer participates in a sensing by proxy procedure after a first sensing by proxy procedure is terminated, the first sensing by proxy procedure is a sensing by proxy procedure between the first apparatus and the second apparatus, and the third message is used to request to establish a second sensing by proxy procedure.

According to a fourth aspect, this application provides a sensing method. The method may be performed by a second apparatus, or may be performed by a component (for example, a chip) in the second apparatus. This is not limited. An example in which the second apparatus is an execution body is used. The method includes: The second apparatus sends third indication information to a first apparatus, where the third indication information indicates that the second apparatus requests the first apparatus not to send a third message to the second apparatus within second duration after a first sensing by proxy procedure is terminated, or the third indication information indicates that the second apparatus does not send a third message to the first apparatus within second duration after a first sensing by proxy procedure is terminated, or the third indication information indicates that the second apparatus no longer participates in a sensing by proxy procedure after a first sensing by proxy procedure is terminated, the first sensing by proxy procedure is a sensing by proxy procedure between the first apparatus and the second apparatus, and the third message is used to request to establish a second sensing by proxy procedure.

According to the method provided in this application, the second apparatus sends the third indication information to the first apparatus, and the third indication information indicates that the second apparatus requests the first apparatus not to send the third message to the second apparatus within the second duration after the first sensing by proxy procedure is terminated. This optimizes a time interaction problem in sensing by proxy procedure termination, so that time for participating in a next sensing by proxy procedure after the first sensing by proxy procedure is terminated is more flexible. For example, the first apparatus is a sensing by proxy initiator, and the second apparatus is a sensing by proxy responder. The sensing by proxy responder may flexibly adjust, according to a service requirement of the sensing by proxy responder or the like, time for re-participating in a sensing by proxy procedure. The sensing by proxy initiator can determine an intent of the sensing by proxy responder by using the third indication information, thereby avoiding resource consumption caused because the sensing by proxy initiator does not know the intent of the sensing by proxy responder and initiates a sensing by proxy procedure to the sensing by proxy responder within the second duration after the first sensing by proxy procedure is terminated.

Alternatively, the third indication information indicates that the second apparatus does not send the third message to the first apparatus within the second duration after the first sensing by proxy procedure is terminated. This optimizes a time interaction problem in sensing by proxy procedure termination, so that time for participating in a next sensing by proxy procedure after the first sensing by proxy procedure is terminated is more flexible. For example, the first apparatus is a sensing by proxy responder, and the second apparatus is a sensing by proxy initiator. The sensing by proxy initiator may flexibly adjust time for establishing a sensing by proxy procedure with each sensing by proxy responder. This can increase fairness of initiating a sensing by proxy procedure by the sensing by proxy initiator in an environment in which there are a plurality of sensing by proxy responders. The sensing by proxy responder can determine an intent of the sensing by proxy initiator by using the third indication information, to respond to a sensing by proxy procedure establishment request initiated by another sensing by proxy initiator.

Alternatively, the third indication information indicates that the second apparatus no longer participates in a sensing by proxy procedure after the first sensing by proxy procedure is terminated. This optimizes a time interaction problem in sensing by proxy procedure termination, to more flexibly indicate that the second apparatus no longer participates in a subsequent sensing by proxy procedure after the first sensing by proxy procedure is terminated, thereby reducing resource consumption caused by signaling exchange in a subsequent sensing by proxy procedure establishment process. For example, the first apparatus is a sensing by proxy initiator, and the second apparatus is a sensing by proxy responder. The sensing by proxy responder may no longer participate in a sensing by proxy procedure according to a situation of the sensing by proxy responder; and based on the third indication information, the sensing by proxy initiator may no longer send the third message to the sensing by proxy responder after the first sensing by proxy procedure is terminated, thereby avoiding resource consumption caused because the sensing by proxy initiator does not know that the sensing by proxy responder no longer participates in a sensing by proxy procedure and still sends the third message to the sensing by proxy responder.

Based on the third aspect or the fourth aspect, in a possible implementation, the third indication information may be carried in a fourth message.

The fourth message may be used to request to terminate the first sensing by proxy procedure. For example, the fourth message may be a sensing by proxy termination frame in wireless local area network sensing, or the fourth message may be a directional multi-gigabit sensing by proxy termination frame in directional multi-gigabit sensing.

Alternatively, the fourth message may be used to respond to an establishment request for the first sensing by proxy procedure. For example, the fourth message may be a sensing by proxy response frame in wireless local area network sensing, or the fourth message may be a directional multi-gigabit sensing by proxy response frame in directional multi-gigabit sensing.

Alternatively, the fourth message may be used to request to establish the first sensing by proxy procedure. For example, the fourth message may be a sensing by proxy request frame in wireless local area network sensing, or the fourth message may be a directional multi-gigabit sensing by proxy request frame in directional multi-gigabit sensing.

According to the foregoing implementation, the second apparatus may send the third indication information to the first apparatus in a procedure of terminating the first sensing by proxy procedure, or the second apparatus may send the third indication information to the first apparatus in a procedure of establishing the first sensing by proxy procedure. This implementation is flexible.

Based on the third aspect or the fourth aspect, in a possible implementation, the fourth message may further include fourth indication information, and the fourth indication information may indicate that the fourth message includes the third indication information. For example, the fourth message may further include a sensing by proxy termination control field, and the fourth indication information is carried in the sensing by proxy termination control field. For another example, the fourth message may further include a directional multi-gigabit sensing by proxy termination control field, and the fourth indication information is carried in the directional multi-gigabit sensing by proxy termination control field.

According to the foregoing implementation, the first apparatus may determine, by parsing the fourth indication information, whether the fourth message includes the third indication information.

Based on the third aspect or the fourth aspect, in a possible implementation, the fourth message may further include a status code and a third field, the status code may be success, or the status code may be rejected with suggestion, and the third field may indicate the second duration. When the status code is declined, the third indication information may indicate that the second apparatus requests the first apparatus not to send the third message to the second apparatus within the second duration after establishment of the first sensing by proxy procedure is declined. When the status code is success, or the status code is rejected with suggestion, the third indication information may indicate that the second apparatus requests the first apparatus not to send the third message to the second apparatus within the second duration after the first sensing by proxy procedure is terminated. Optionally, the third field may be a decline duration indication field, or the third field may be a duration indication field.

Based on the third aspect or the fourth aspect, in a possible implementation, if the third indication information indicates that the second apparatus requests the first apparatus not to send the third message to the second apparatus within the second duration after the first sensing by proxy procedure is terminated, the fourth message may further include a fourth field, where a value of the fourth field includes a third value and a fourth value. The third value may indicate that the second apparatus no longer participates in a sensing by proxy procedure after the first sensing by proxy procedure is terminated. The fourth value may indicate that the fourth field is reserved.

Based on the third aspect or the fourth aspect, in a possible implementation, if the third indication information indicates that the second apparatus requests the first apparatus not to send the third message to the second apparatus within the second duration after the first sensing by proxy procedure is terminated, the second duration may be infinite. In other words, the third indication information indicates that the second apparatus no longer participates in a sensing by proxy procedure after the first sensing by proxy procedure is terminated.

Based on the third aspect or the fourth aspect, in a possible implementation, the first apparatus is a sensing by proxy initiator, and the second apparatus is a sensing by proxy responder. In this case, the third indication information indicates that the second apparatus requests the first apparatus not to send the third message to the second apparatus within the second duration after the first sensing by proxy procedure is terminated, or the third indication information indicates that the second apparatus no longer participates in a sensing by proxy procedure after the first sensing by proxy procedure is terminated. Alternatively, the first apparatus is a sensing by proxy responder, and the second apparatus is a sensing by proxy initiator. In this case, the third indication information indicates that the second apparatus does not send the third message to the first apparatus within the second duration after the first sensing by proxy procedure is terminated.

According to a fifth aspect, this application provides a sensing method. The method may be performed by a first apparatus, or may be performed by a component (for example, a chip) in the first apparatus. This is not limited. An example in which the first apparatus is an execution body is used. The method includes: The first apparatus receives third indication information from a second apparatus, where the third indication information indicates that the second apparatus requests the first apparatus not to send a third message to the second apparatus within second duration after establishment of a first sensing by proxy procedure is declined, the first sensing by proxy procedure is a sensing by proxy procedure between the first apparatus and the second apparatus, and the third message is used to request to establish a second sensing by proxy procedure.

According to a sixth aspect, this application provides a sensing method. The method may be performed by a second apparatus, or may be performed by a component (for example, a chip) in the second apparatus. This is not limited. An example in which the second apparatus is an execution body is used. The method includes: The second apparatus sends third indication information to a first apparatus, where the third indication information indicates that the second apparatus requests the first apparatus not to send a third message to the second apparatus within second duration after establishment of a first sensing by proxy procedure is declined, the first sensing by proxy procedure is a sensing by proxy procedure between the first apparatus and the second apparatus, and the third message is used to request to establish a second sensing by proxy procedure.

According to the method provided in this application, the second apparatus sends the third indication information to the first apparatus, and the third indication information indicates that the second apparatus requests the first apparatus not to send the third message to the second apparatus within the second duration after the first sensing by proxy procedure is declined, so that time for participating in a next sensing by proxy procedure after establishment of the first sensing by proxy procedure is declined is more flexible. When a sensing by proxy initiator is rejected by a sensing by proxy responder, an intent of the sensing by proxy responder may be determined based on the third indication information, to avoid that the sensing by proxy initiator repeatedly initiates a plurality of sensing by proxy procedures in a case of being rejected, thereby reducing resource consumption caused by signaling exchange in a sensing by proxy procedure establishment process.

Based on the fifth aspect or the sixth aspect, in a possible implementation, the third indication information may be carried in a fourth message.

The fourth message may be used to request to terminate the first sensing by proxy procedure. For example, the fourth message may be a sensing by proxy termination frame in wireless local area network sensing, or the fourth message may be a directional multi-gigabit sensing by proxy termination frame in directional multi-gigabit sensing.

Alternatively, the fourth message may be used to respond to an establishment request for the first sensing by proxy procedure. For example, the fourth message may be a sensing by proxy response frame in wireless local area network sensing, or the fourth message may be a directional multi-gigabit sensing by proxy response frame in directional multi-gigabit sensing.

Based on the fifth aspect or the sixth aspect, in a possible implementation, the fourth message may further include fourth indication information, and the fourth indication information may indicate that the fourth message includes the third indication information. For example, the fourth message may further include a sensing by proxy termination control field, and the fourth indication information is carried in the sensing by proxy termination control field. For another example, the fourth message may further include a directional multi-gigabit sensing by proxy termination control field, and the fourth indication information is carried in the directional multi-gigabit sensing by proxy termination control field.

Based on the fifth aspect or the sixth aspect, in a possible implementation, the fourth message may further include a status code and a third field, the status code may be declined, and the third field may indicate the second duration. When the status code is declined, the third indication information may indicate that the second apparatus requests the first apparatus not to send the third message to the second apparatus within the second duration after establishment of the first sensing by proxy procedure is declined. When the status code is success, or the status code is rejected with suggestion, the third indication information may indicate that the second apparatus requests the first apparatus not to send the third message to the second apparatus within the second duration after the first sensing by proxy procedure is terminated. Optionally, the third field may be a decline duration indication field, or may be a duration indication field.

Based on the fifth aspect or the sixth aspect, in a possible implementation, the first apparatus is a sensing by proxy initiator, and the second apparatus is a sensing by proxy responder.

According to a seventh aspect, this application provides a communication apparatus. The communication apparatus is configured to perform the method according to any one of the first aspect, the third aspect, or the fifth aspect and the possible implementations of the first aspect, the third aspect, or the fifth aspect. The communication apparatus is, for example, a first apparatus, or a functional module in the first apparatus, for example, a baseband apparatus or a chip system.

In a possible implementation, the communication apparatus includes a baseband apparatus and a radio frequency apparatus.

In another possible implementation, the communication apparatus includes a processing module (sometimes also referred to as a processing unit) and a transceiver module (sometimes also referred to as a transceiver unit). The transceiver module can implement a sending function and a receiving function. When the transceiver module implements the sending function, the transceiver module may be referred to as a sending module (sometimes also referred to as a sending unit). When the transceiver module implements the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to an eighth aspect, this application provides a communication apparatus. The communication apparatus is configured to perform the method according to any one of the second aspect, the fourth aspect, or the sixth aspect and the possible implementations of the second aspect, the fourth aspect, or the sixth aspect. The communication apparatus is, for example, a second apparatus, or a functional module in the second apparatus, for example, a baseband apparatus or a chip system.

In a possible implementation, the communication apparatus includes a baseband apparatus and a radio frequency apparatus.

In another possible implementation, the communication apparatus includes a processing module (sometimes also referred to as a processing unit) and a transceiver module (sometimes also referred to as a transceiver unit). The transceiver module can implement a sending function and a receiving function. When the transceiver module implements the sending function, the transceiver module may be referred to as a sending module (sometimes also referred to as a sending unit). When the transceiver module implements the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to a ninth aspect, this application further provides a communication apparatus. The communication apparatus may include at least one processor. Optionally, the communication apparatus may further include a memory. The memory is configured to store one or more computer programs or instructions. The at least one processor is configured to execute the one or more computer programs or instructions stored in the memory, so that the communication apparatus performs the method according to any one of the first aspect to the sixth aspect and the possible implementations of the first aspect to the sixth aspect.

According to a tenth aspect, this application further provides a chip system. The chip system may include at least one processor. Optionally, the at least one processor is coupled to a memory. The at least one processor is configured to execute one or more computer programs or instructions in the memory, to implement the method according to any one of the first aspect to the sixth aspect and the possible implementations of the first aspect to the sixth aspect. Optionally, the chip system may include a chip, or may include a chip and another discrete component. Optionally, the chip system may also include the memory.

According to an eleventh aspect, this application further provides a communication system. The communication system includes one or two of the following: the communication apparatus according to the seventh aspect or the communication apparatus according to the eighth aspect.

According to a twelfth aspect, this application further provides a computer-readable storage medium. The computer-readable storage medium is configured to store a computer program or instructions. When the computer program or the instructions are run, the method according to any one of the first aspect to the sixth aspect and the possible implementations of the first aspect to the sixth aspect is implemented.

According to a thirteenth aspect, this application further provides a computer program product including instructions. When the computer program product runs on a computer, the method according to any one of the first aspect to the sixth aspect and the possible implementations of the first aspect to the sixth aspect is implemented.

For technical effects that can be achieved in any one of the seventh aspect to the thirteenth aspect and the possible implementations of the seventh aspect to the thirteenth aspect, correspondingly refer to the technical effects that can be achieved in any one of the first aspect to the sixth aspect and the possible implementations of the first aspect to the sixth aspect. Details are not described again.

### BRIEF DESCRIPTION OF DRAWINGS

FIG. 1 is a diagram of a network architecture of a WLAN to which an embodiment of this application is applicable;
FIG. 2 is a schematic flowchart of a sensing method according to an embodiment of this application;
FIG. 3 is a diagram of a structure of a sensing measurement termination frame according to an embodiment of this application;
FIG. 4 is a diagram of a structure of another sensing measurement termination frame according to an embodiment of this application;
FIG. 5 is a diagram of a structure of a DMG termination duration indication field according to an embodiment of this application;
FIG. 6 is a diagram of a structure of a sensing measurement request frame according to an embodiment of this application;
FIG. 7 is a diagram of a structure of a sensing measurement response frame according to an embodiment of this application;
FIG. 8 is a diagram of a structure of another sensing measurement response frame according to an embodiment of this application;
FIG. 9 is a schematic flowchart of another sensing method according to an embodiment of this application;
FIG. 10 is a diagram of a structure of an SBP termination frame according to an embodiment of this application;
FIG. 11 is a diagram of a structure of another SBP termination frame according to an embodiment of this application;
FIG. 12 is a diagram of a structure of an SBP request frame according to an embodiment of this application;
FIG. 13 is a diagram of a structure of an SBP response frame according to an embodiment of this application;
FIG. 14 is a diagram of a structure of another SBP response frame according to an embodiment of this application;
FIG. 15 is a schematic flowchart of another sensing method according to an embodiment of this application;
FIG. 16 is a diagram of a structure of a communication apparatus according to an embodiment of this application;
FIG. 17 is a diagram of a structure of another communication apparatus according to an embodiment of this application; and
FIG. 18 is a diagram of a structure of another communication apparatus according to an embodiment of this application.

### DESCRIPTION OF EMBODIMENTS

Embodiments of this application are presented with respect to a system including a plurality of devices, components, modules, or the like. It should be understood that the system may include other devices, components, modules, or the like that are not mentioned, or may include only a part of devices, components, modules, or the like that are mentioned in embodiments.

Embodiments of this application provide a sensing method and a communication apparatus, to optimize a time interaction problem in sensing measurement session termination, so that time for a sensing initiator or a sensing responder to participate in a next sensing measurement session after a sensing measurement session is terminated is more flexible. The method and the apparatus in this application are based on a same technical concept. Because the method and the apparatus have similar principles for resolving a problem, mutual reference may be made between implementations of the apparatus and the method. Repeated parts are not described in detail again.

In embodiments of this application, "a plurality of" may mean two or more. In view of this, in embodiments of this application, "a plurality of" may alternatively be understood as "at least two". "At least one" may be understood as one or more, for example, one, two, or more. For example, "including at least one" means including one, two, or more. For example, including at least one of A, B, and C means that A, B, C, A and B, A and C, B and C, or A, B, and C may be included. "And/or" describes an association relationship between associated objects and three relationships may specifically exist. For example, A and/or B may represent the following three cases: Only A exists, both A and B exist, and only B exists. In addition, the character "/" generally indicates an "or" relationship between the associated objects, unless otherwise specified.

In addition, the terms "system" and "network" in embodiments of this application may be used interchangeably, and "according to" and "based on" may be used interchangeably.

Ordinal numerals such as "first" and "second" in embodiments of this application are usually for distinguishing between different objects, and are not for limiting a sequence, a time sequence, priorities, importance degrees, or the like of a plurality of objects. For example, the first apparatus and the second apparatus are used to distinguish between different apparatuses, and do not limit priorities, importance degrees, or the like of the two apparatuses.

To make objectives, technical solution, and advantages of embodiments of this application clearer, the following further describes embodiments of this application in detail with reference to the accompanying drawings.

Embodiments of this application are applicable to a WLAN scenario, for example, are applicable to the institute of electrical and electronics engineers (institute of electrical and electronics engineers, IEEE) 802.11 series of standards, for example, the 802.11ax standard, or a next generation thereof, for example, the 802.11be standard, Wi-Fi 7 or extremely high throughput (extremely high throughput, EHT), 802.11ad, 802.11ay, or 802.11bf. Alternatively, embodiments of this application are also applicable to a wireless local area network system like an internet of things (internet of things, IoT) network or a vehicle-to-everything (Vehicle to X, V2X) network. Certainly, embodiments of this application are further applicable to other possible communication systems, for example, a new radio (new radio, NR) system, a long term evolution (long term evolution, LTE) system, and a future 6G communication system.

Although embodiments of this application are mainly described by using an example of deploying a WLAN network, especially a network to which the IEEE 802.11 system standard is applied, a person skilled in the art readily understands that various aspects of this application may be extended to other networks that use various standards or protocols, for example, Bluetooth (Bluetooth), a high performance radio LAN (high performance radio LAN, HIPERLAN) (which is a wireless standard that is similar to the IEEE 802.11 standard, and is mainly used in Europe), a wide area network (wide area network, WAN), a personal area network (personal area network, PAN), or another known or later developed network. Therefore, regardless of a used coverage area and a used wireless access protocol, various aspects provided in this application are applicable to any appropriate wireless network.

The following describes, with reference to the accompanying drawings, a network architecture to which embodiments of this application are applicable.

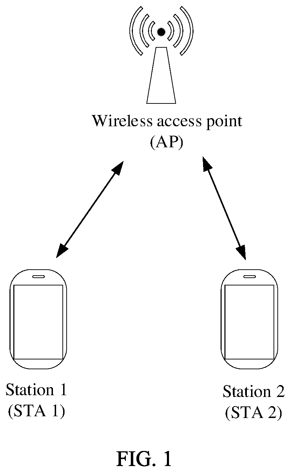

The network architecture and the application scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new application scenarios, the technical solutions provided in embodiments of this application are also applicable to similar technical problems. In embodiments of this application, a network architecture shown in FIG. 1 is used as an example for description. When the technical solutions in embodiments of this application are applied to another network architecture, the devices, components, modules, or the like in embodiments may be replaced with corresponding devices, components, or modules in the another network architecture. This is not limited.

FIG. 1 is an example of a diagram of a network architecture of a WLAN to which an embodiment of this application is applicable. In FIG. 1, an example in which the WLAN includes one wireless access point (access point, AP) and two stations (station, STA) is used. In addition, embodiments of this application are also applicable to communication between APs. For example, the APs may communicate with each other by using a distributed system (distributed system, DS). Embodiments of this application are also applicable to communication between STAs. It should be understood that quantities of APs and STAs in FIG. 1 are merely an example. There may be more or fewer APs and STAs.

A STA associated with an AP may be briefly referred to as an associated STA, and the STA may establish an association with the AP by using an association procedure. A STA that does not establish an association with an AP may be briefly referred to as a non-associated STA.

The access point may be an access point through which a terminal device (for example, a mobile phone) accesses a wired (or wireless) network, and is mainly deployed in a home, a building, and a campus, with a typical coverage radius ranging from dozens of meters to hundreds of meters. Certainly, the access point may be alternatively deployed outdoors. The access point is equivalent to a bridge that connects a wired network and a wireless network, and a main function is to connect wireless network clients together, and then connect the wireless network to the Ethernet. Specifically, the access point may be a terminal device (such as a mobile phone) or a network device (such as a router) with a Wi-Fi chip. The access point may be a device that supports the 802.1 1bf standard. Alternatively, the access point may be a device that supports a plurality of wireless local area network (wireless local area network, WLAN) standards of the 802.11 family such as 802.11ay, 802.11ad, 802.11ax, 802.11ac, 802.11n, 802.11g, 802.11b, 802.11a, 802.11be, and a next-generation standard of 802.11be. The access point in this application may be a high efficiency (high efficiency, HE) AP or an extremely high throughput (extremely high throughput, EHT) AP, or may be an access point applicable to a future-generation Wi-Fi standard.

The station may be a wireless communication chip, a wireless sensor, a wireless communication terminal, or the like, and may also be referred to as a user. For example, the station may be a mobile phone that supports a Wi-Fi communication function, a tablet computer that supports a Wi-Fi communication function, a set-top box that supports a Wi-Fi communication function, a smart television set that supports a Wi-Fi communication function, a smart wearable device that supports a Wi-Fi communication function, a vehicle-mounted communication device that supports a Wi-Fi communication function, a computer that supports a Wi-Fi communication function, or the like. Optionally, the station may support the 802.11bf standard. The station may also support a plurality of WLAN standards of the 802.11 family such as 802.11ay, 802.11ad, 802.11ax, 802.11ac, 802.11n, 802.11g, 802.11b, 802.11a, 802.11be, and a next-generation standard of 802.11be.

The station in this application may be a directional multi-gigabit (directional multi-gigabit, DMG) STA, an EDMG enhanced directional multi-gigabit (enhanced directional multi-gigabit, EDMG) STA, an HE STA, or an extremely high throughput (extremely high throughput, EHT) STA, or may be a STA applicable to a future-generation Wi-Fi standard.

For example, the access point and the station may be devices used in an internet of vehicles, internet of things nodes, sensors, or the like in an internet of things (internet of things, IoT), smart cameras, smart remote controls, smart water or electricity meters, or the like in a smart home, or sensors in a smart city.

The AP and the STA in embodiments of this application may be an AP and a STA that are applicable to the IEEE 802.11 system standard. The AP is an apparatus that is deployed in a wireless communication network and that provides a wireless communication function for a STA associated with the AP. The AP may be used as a hub of the communication system, and is usually a network side product that supports a media access control (media access control, MAC) layer and a physical (physical, PHY) layer PHY in the 802.11 system standard, for example, may be a communication device such as a base station, a router, a gateway, a repeater, a communication server, a switch, or a bridge. The base station may include various forms of macro base stations, micro base stations, relay stations, and the like. Herein, for ease of description, the devices mentioned above are collectively referred to as an AP. The STA is usually a terminal product that supports the MAC layer and the PHY layer in the 802.11 system standard, for example, a mobile phone or a notebook computer.

The following uses an 802.1 1bf scenario as an example for description in embodiments of this application. Embodiments of this application relate to a sensing technology. The following first describes related content of the sensing technology.

Sensing measurement may also be referred to as wireless sensing or WLAN sensing, and means that a transmitter and a receiver perform signal transmission to discover a target or determine a target status. WLAN sensing means that a STA having a WLAN sensing capability uses a received WLAN signal to detect feature information of an expected target in a given environment. For example, the feature information includes one or more of a distance, a speed, an angle, a motion, existence or proximity, a gesture, and the like. The target includes one or more of an object, a person, an animal, and the like. The environment includes one or more of a room, a house, a vehicle, an enterprise, and the like. For example, the transmitter may send a signal used for sensing measurement to the receiver, and the receiver may measure the signal to obtain a channel estimation result, for example, channel state information (channel state information, CSI). The receiver may perform sensing based on the CSI. Alternatively, the receiver may send the channel estimation result to the transmitter, and the transmitter performs target sensing or target status sensing based on the channel estimation result. For example, the receiver or the transmitter may process the CSI, to determine whether a moving target exists in the environment.

In a sensing measurement process, devices that participate in sensing mainly include the following roles.

Sensing initiator (sensing initiator): is a device that initiates a sensing measurement procedure and sends a sensing measurement request. For a non-DMG device, the sensing initiator is a device that sends a sensing measurement request (sensing measurement request) frame. For a DMG device, the sensing initiator is a device that sends a DMG sensing measurement request (DMG sensing measurement request) frame.

Sensing responder (sensing responder): is a device that responds to a sensing procedure initiated by the sensing initiator and sends a sensing measurement response. For a non-DMG device, the sensing responder is a device that sends a sensing measurement response (sensing measurement response) frame. For a DMG device, the sensing responder is a device that sends a DMG sensing measurement response (DMG sensing measurement response) frame.

Sensing transmitter (sensing transmitter): is a device that sends a sensing signal. The sensing signal may be a signal used for sensing measurement, for example, a physical layer convergence procedure (physical layer convergence procedure, PLCP) protocol data unit (PLCP protocol data unit, PPDU). Sensing may be WLAN sensing, or may be DMG sensing.

Sensing receiver (sensing receiver): is a device that receives a sensing signal sent by the sensing transmitter. Sensing may be WLAN sensing, or may be DMG sensing.

In the IEEE 802.11bf standard, sensing is processed as a session. For example, a sensing initiator may send a sensing measurement request frame to request a sensing responder to participate in a sensing measurement session; and the sensing responder may send a sensing measurement response frame to respond to the sensing measurement session sent by the sensing initiator. In an exchange process of the sensing measurement request frame or the sensing measurement response frame, the sensing initiator may allocate response sending or receiving roles, different parameters, whether feedback is needed, and the like to different sensing responders based on different sensing applications, to complete establishment of the sensing measurement session.

After establishment of the sensing measurement session is completed, the sensing initiator and the sensing responder perform a sensing measurement exchange phase to perform sensing measurement. When sensing measurement does not need to be continued, the sensing initiator or the sensing responder may consider termination of the established sensing measurement session. For example, for termination of the sensing measurement session, display termination (or ending, closing, or the like) may be performed by sending a sensing measurement termination (sensing measurement termination) frame. For another example, for termination of the sensing measurement session, implicit termination may be performed by using a measurement session expiry exponent (measurement session expiry exponent) exchanged during establishment of the sensing measurement session. To be specific, when there is no new frame exchange for the sensing measurement session within duration indicated by the measurement session expiry exponent, the sensing initiator and the sensing responder terminate the sensing measurement session after the duration is satisfied.

The IEEE 802.11bf standard further proposes a sensing by proxy (proxy) procedure. The following describes the sensing by proxy (proxy) procedure.

A typical sensing by proxy (proxy) (sensing by proxy, SBP) procedure is initiated by a non-wireless access point (non-access point, non-AP) (which sends an SBP request) and responded to by an AP (which receives the SBP request and sends an SBP response).

In this scenario, a device that sends the SBP request (SBP request) is referred to as an SBP initiator (SBP initiator), and the SBP initiator is usually a STA.

A device that receives the SBP request and sends the SBP response (SBP response) is referred to as an SBP responder (SBP responder), and the SBP responder is usually an AP.

As the SBP responder, after receiving an SBP request frame, the AP performs sensing establishment based on a parameter carried in the SBP request frame, completes measurement, and performs reporting.

In an SBP reporting phase, as the SBP responder, the AP collects a result of established sensing and then reports the result to the SBP initiator (STA).

Similarly, the SBP initiator or the SBP responder may consider termination of the established SBP procedure when the SBP procedure does not need to be continued. For example, for termination of the SBP procedure, display termination or ending may be performed by sending an SBP termination (SBP termination) frame. For another example, for termination of the SBP procedure, implicit termination or ending may be performed by using an SBP procedure expiry exponent (SBP procedure expiry exponent) exchanged during establishment of the SBP procedure. To be specific, when there is no new frame exchange for the SBP procedure within duration indicated by the SBP procedure expiry exponent, the SBP initiator and the SBP responder terminate or end the SBP procedure after the duration is satisfied. The SBP procedure may also be referred to as an SBP session or the like. This is not limited.

In a current standard, for example, IEEE 802.11bf, a solution design of participating in a sensing measurement session after a sensing measurement session is terminated is not flexible enough. Therefore, embodiments of this application provide a sensing method and a communication apparatus, to optimize a time interaction problem in sensing measurement session termination, so that time for a sensing initiator or a sensing responder to participate in a next sensing measurement session after a sensing measurement session is terminated is more flexible.

This application is applicable to WLAN sensing (WLAN sensing). The WLAN sensing includes but is not limited to: 60 GHz sensing (60 GHz Sensing) and sub-7 GHz sensing (Sub-7 GHz sensing).

The 60 GHz sensing may also be referred to as a name such as DMG sensing or millimeter wave sensing (millimeter wave sensing, MMW sensing). The name of the 60 GHz sensing is not limited in embodiments of this application. For example, the 60 GHz sensing may include but is not limited to: a DMG sensing procedure (DMG sensing procedure) and a DMG SBP procedure (DMG SBP procedure).

The sub-7 GHz sensing may also be referred to as a name such as sensing (sensing) or non-DMG sensing (non-DMG sensing). The name of the sub-7 GHz sensing is not limited in embodiments of this application. For example, the sub-7 GHz sensing may include but is not limited to: a sensing procedure (sensing procedure) and an SBP procedure (SBP procedure).

For ease of description, the sub-7 GHz sensing is referred to as sensing for short and the 60 GHz sensing is referred to as DMG sensing below. However, the names of the sub-7 GHz sensing and the 60 GHz sensing are not limited in embodiments of this application. For example, with evolution of a network architecture and emergence of a new application scenario, the sub-7 GHz sensing may have a new name, the 60 GHz sensing may also have a new name. The technical solutions provided in embodiments of this application are also applicable.

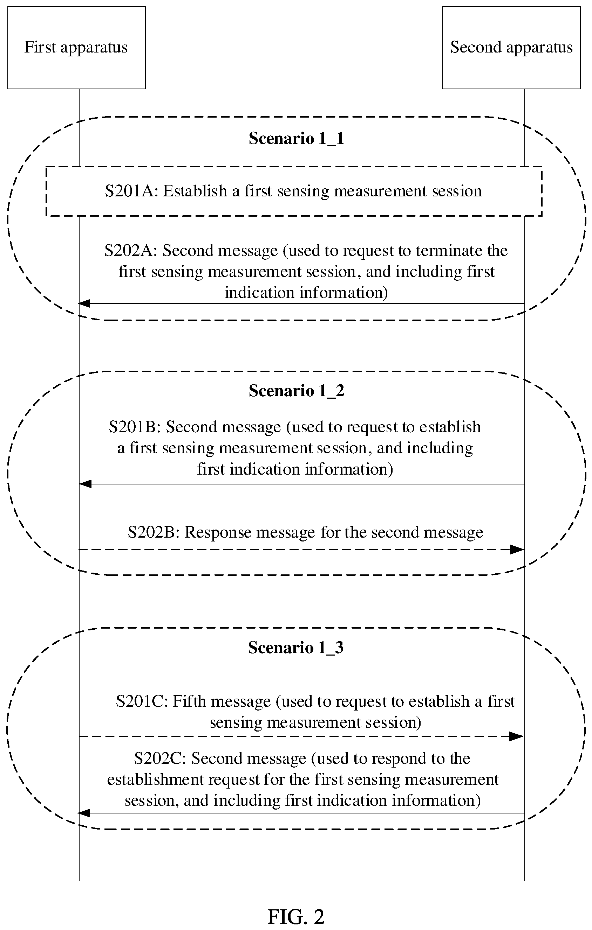

FIG. 2 is a schematic flowchart of a sensing method according to an embodiment of this application. When the method procedure provided in this embodiment of this application is applied to the system shown in FIG. 1, the AP or a chip in the AP or the STA or a chip in the STA in FIG. 1 may perform a method performed by a first apparatus in the following procedure, or the AP or a chip in the AP or the STA or a chip in the STA in FIG. 1 may perform a method performed by a second apparatus in the following procedure. It may be understood that a specific structure of an execution body of a method provided in embodiments of this application is not specifically limited in embodiments shown below, provided that a program that records code for the method provided in embodiments of this application can be run to perform communication according to the method provided in embodiments of this application. In addition, dashed lines in FIG. 2 indicate optional steps.

In this embodiment, the second apparatus sends first indication information to the first apparatus. Correspondingly, the first apparatus receives the first indication information from the second apparatus.

In an implementation, the first indication information may indicate that the second apparatus requests (request) the first apparatus not to send a first message to the second apparatus within first duration after a first sensing measurement session is terminated. For example, that the first indication information indicates that the second apparatus requests the first apparatus not to send the first message to the second apparatus within the first duration after the first sensing measurement session is terminated may be replaced with: the first indication information indicates the first apparatus not to send the first message to the second apparatus within the first duration after the first sensing measurement session is terminated; or may be replaced with: the first indication information indicates that the second apparatus requests the first apparatus to send the first message to the second apparatus after the first duration after the first sensing measurement session is terminated; or may be replaced with: the first indication information indicates the first apparatus to send the first message to the second apparatus after the first duration after the first sensing measurement session is terminated; or may be replaced with: the first indication information indicates that the second apparatus requests the first apparatus not to initiate a new sensing measurement session within the first duration after the first sensing measurement session is terminated; or may be replaced with: the first indication information indicates the first apparatus not to initiate a new sensing measurement session within the first duration after the first sensing measurement session is terminated; or may be replaced with: the first indication information indicates that the second apparatus requests the first apparatus not to initiate a new sensing measurement session to the second apparatus within the first duration after the first sensing measurement session is terminated; or may be replaced with: the first indication information indicates the first apparatus not to initiate a new sensing measurement session to the second apparatus within the first duration after the first sensing measurement session is terminated. In this case, the first apparatus may be a sensing initiator, and the second apparatus may be a sensing responder.

In another implementation, the first indication information may alternatively indicate that the second apparatus does not send a first message to the first apparatus within first duration after a first sensing measurement session is terminated. For example, that the first indication information indicates that the second apparatus does not send the first message to the first apparatus within the first duration after the first sensing measurement session is terminated may be replaced with: the first indication information indicates that the second apparatus sends the first message to the first apparatus after the first duration after the first sensing measurement session is terminated; or may be replaced with: the first indication information indicates that the second apparatus does not initiate a new sensing measurement session within the first duration after the first sensing measurement session is terminated; or may be replaced with: the first indication information indicates that the second apparatus does not initiate a new sensing measurement session to the first apparatus within the first duration after the first sensing measurement session is terminated. In this case, the second apparatus may be a sensing initiator, and the first apparatus may be a sensing responder.

In another implementation, the first indication information may alternatively indicate that the second apparatus no longer participates in a sensing measurement session after a first sensing measurement session is terminated. For example, that the first indication information indicates that the second apparatus no longer participates in a sensing measurement session after the first sensing measurement session is terminated may be replaced with: the first indication information indicates that the second apparatus requests the first apparatus not to send a first message to the second apparatus after the first sensing measurement session is terminated; or may be replaced with: the first indication information indicates that the second apparatus requests the first apparatus not to initiate a new sensing measurement session after the first sensing measurement session is terminated; or may be replaced with: the first indication information indicates that the second apparatus requests the first apparatus not to initiate a new sensing measurement session to the second apparatus after the first sensing measurement session is terminated. In this case, the first apparatus may be a sensing initiator, and the second apparatus may be a sensing responder.

The first sensing measurement session is a sensing measurement session between the first apparatus and the second apparatus. In an implementation, the first sensing measurement session may be a sensing measurement session in sensing, or the first sensing measurement session may be a sensing measurement session (which may be denoted as a DMG sensing measurement session) in DMG sensing. This is not limited. The first message may be used to request to establish a second sensing measurement session. The second sensing measurement session is a sensing measurement session between the first apparatus and the second apparatus. In other words, the first message may be used to request to establish the second sensing measurement session between the first apparatus and the second apparatus. In an implementation, the second sensing measurement session may be a sensing measurement session in sensing, or the second sensing measurement session may be a sensing measurement session in DMG sensing. This is not limited. The first sensing measurement session and the second sensing measurement session are different sensing measurement sessions.

In an implementation, the sensing initiator may be a sensing initiator in sensing, and correspondingly, the sensing responder may be a sensing responder in sensing. In another implementation, the sensing initiator may alternatively be a sensing initiator (which may be denoted as a DMG sensing initiator) in DMG sensing, and correspondingly, the sensing responder may alternatively be a sensing responder (which may be denoted as a DMG sensing responder) in DMG sensing.

It should be noted that the term "sending a first message" may be replaced with "initiating a sensing measurement session", or may be replaced with "initiating a new sensing measurement session", or the like. This is not limited. The term "request" may be replaced with "require", or may be replaced with "expect", or may be replaced with "allow", or the like. This is not limited. The term "participating in a sensing measurement session" may be replaced with "establishing a sensing measurement session", or may be replaced with "participating in establishing a sensing measurement session", or the like.

In an implementation, the second apparatus may send the first indication information to the first apparatus after establishment of the first sensing measurement session is completed; or may send the first indication information to the first apparatus in a process of establishing the first sensing measurement session. For example, the first indication information may be carried in a second message. To be specific, the second apparatus sends the second message to the first apparatus, where the second message includes the first indication information. In FIG. 2, an example in which the first indication information is carried in the second message is used for description in three scenarios (denoted as a scenario 1_1, a scenario 1_2, and a scenario 1_3). Specifically, in the scenario 1_1, the second message may be used to request to terminate a first sensing measurement session, which corresponds to content of S201A and S202A shown in FIG. 2. In the scenario 1_2, the second message may be used to request to establish a first sensing measurement session, which corresponds to content of S201B and S202B shown in FIG. 2. In the scenario 1_3, the second message may be used to respond to an establishment request for a first sensing measurement session, which corresponds to content of S201C and S202C shown in FIG. 2.

As shown in FIG. 2, the method may include the following content.

S201A: A first apparatus and a second apparatus establish a first sensing measurement session.

S201A is an optional step, and is represented by a dashed line in FIG. 2.

In the scenario 1_1, the first sensing measurement session may be first established between the first apparatus and the second apparatus. In an implementation, the first apparatus is a sensing initiator, the second apparatus is a sensing responder, and the first sensing measurement session is a sensing measurement session in sensing. A process of establishing the first sensing measurement session may be as follows: The first apparatus may send a sensing measurement request (sensing measurement request) frame 1 to the second apparatus, where the sensing measurement request frame 1 may be used to request to establish the first sensing measurement session; the second apparatus receives the sensing measurement request frame 1 from the first apparatus, and sends a sensing measurement response (sensing measurement response) frame 1 to the first apparatus; and the first apparatus receives the sensing measurement response frame 1 from the second apparatus. The sensing measurement response frame 1 is used to respond to an establishment request for the first sensing measurement session, for example, accept establishment of the first sensing measurement session, or decline establishment of the first sensing measurement session. In this embodiment, an example in which establishment of the first sensing measurement session is accepted is used. It should be understood that, when the first apparatus is a sensing responder, the second apparatus is a sensing initiator, and the first sensing measurement session is a sensing measurement session in sensing, for a process of establishing the first sensing measurement session, refer to the foregoing content. Details are not described again.

In another implementation, the first apparatus may be a sensing responder, the second apparatus may be a sensing initiator, and the first sensing measurement session is a sensing measurement session in DMG sensing. A process of establishing the first sensing measurement session may be as follows: The second apparatus may send a DMG sensing measurement request (DMG sensing measurement request) frame 2 to the first apparatus, where the DMG sensing measurement request frame 2 may be used to request to establish the first sensing measurement session; the first apparatus receives the DMG sensing measurement request frame 2 from the second apparatus, and sends a DMG sensing measurement response (DMG sensing measurement response) frame 2 to the second apparatus; and correspondingly, the second apparatus receives the DMG sensing measurement response frame 2 from the first apparatus. The DMG sensing measurement response frame 2 is used to respond to an establishment request for the first sensing measurement session, for example, accept establishment of the first sensing measurement session, or decline establishment of the first sensing measurement session. In this embodiment, an example in which establishment of the first sensing measurement session is accepted is used. It should be understood that, when the first apparatus is a sensing initiator, the second apparatus is a sensing responder, and the first sensing measurement session is a sensing measurement session in DMG sensing, for a process of establishing the first sensing measurement session, refer to the foregoing content. Details are not described again.

In this embodiment of this application, unless otherwise specified, the sensing measurement request frame may be a sensing measurement request frame in sensing, and the sensing measurement response frame may be a sensing measurement response frame in sensing; and the DMG sensing measurement request frame may be a sensing measurement request frame in DMG sensing, and the DMG sensing measurement response frame may be a sensing measurement response frame in DMG sensing.

After establishment of the first sensing measurement session is completed, the second apparatus may send a second message to the first apparatus, that is, perform content of S202A.

S202A: The second apparatus sends the second message to the first apparatus.

Correspondingly, the first apparatus receives the second message from the second apparatus.

The second message may include first indication information. In the scenario 1_1, the first indication information may indicate that the second apparatus requests the first apparatus not to send a first message to the second apparatus within first duration after the first sensing measurement session is terminated; or the first indication information may indicate that the second apparatus does not send a first message to the first apparatus within first duration after the first sensing measurement session is terminated; or the first indication information may indicate that the second apparatus no longer participates in a sensing measurement session after the first sensing measurement session is terminated. For details, refer to the foregoing content. Details are not described again.

In an implementation, the second message may include a second field, and the second field may be used to carry the first indication information, and indicate that the second apparatus no longer participates in a sensing measurement session after the first sensing measurement session is terminated. For example, the second field may be a quit sensing (quit sensing) field, or the second field may be a DMG quit sensing (DMG quit sensing) field. Specifically, a value of the second field may include a first value and a second value. The first value may indicate that the second apparatus no longer participates in a sensing measurement session after the first sensing measurement session is terminated, and the second value may indicate that the second field is reserved, that is, the second field is a reserved field. For example, a field length of the second field is 1 bit. The first value may be 0, and the second value may be 1; or the first value may be 1, and the second value may be 0. This is not limited. In this implementation, if the value of the second field is the first value, the first indication information may indicate that the second apparatus no longer participates in a sensing measurement session after the first sensing measurement session is terminated.

In another implementation, the second message may not include the second field, and the first duration is set to indicate that the second apparatus no longer participates in a sensing measurement session after the first sensing measurement session is terminated. For example, the first duration may be infinite, or the first duration may be a preset value, for example, a maximum value that can be indicated by the first indication information. In this case, the first indication information may indicate that the second apparatus no longer participates in a sensing measurement session after the first sensing measurement session is terminated.

In another implementation, if the first indication information indicates that the second apparatus requests the first apparatus not to send the first message to the second apparatus within the first duration after the first sensing measurement session is terminated, the second message may further include a second field, that is, the second message may include the first indication information and the second field. A value of the second field may include a first value and a second value. For details, refer to the foregoing content. Details are not described again. In this implementation, the value of the second field is the second value. In this way, the first indication information may indicate that the second apparatus requests the first apparatus not to send the first message to the second apparatus within the first duration after the first sensing measurement session is terminated.

In an implementation, the second message may further include second indication information. The second indication information may indicate that the second message includes the first indication information, or the second indication information may indicate that the second message does not include the first indication information. In this way, the first apparatus may determine, by parsing the second indication information, whether the second message includes the first indication information. In this embodiment of this application, an example in which the second indication information indicates that the second message includes the first indication information is used for description.

In the scenario 1_1, the second message may be used to request to terminate the first sensing measurement session. For example, the second message may be a sensing measurement termination (sensing measurement termination) frame, or the second message may be a DMG sensing measurement termination (DMG sensing measurement termination) frame. In this embodiment of this application, unless otherwise specified, the sensing measurement termination frame may be a sensing measurement termination frame in sensing, and the DMG sensing measurement termination frame may be a sensing measurement termination frame in DMG sensing.

In an implementation, for sensing (that is, sub-7 GHz sensing), the second message may be a sensing measurement termination frame, the sensing measurement termination frame may include a termination duration indication (termination duration indication) field, and the termination duration indication field is used to carry the first indication information. For example, a termination duration (termination duration) field in the termination duration indication field may indicate the first duration. Specifically, the termination duration field may directly indicate the first duration, or the termination duration field may indicate the first duration in an exponential manner. This is not limited. The termination duration field may also be referred to as a subfield of the termination duration indication field. This is not limited. The termination duration indication field may further include another subfield, for example, include a reserved (reserved) subfield. This is not limited. In addition, a time unit of the first duration may be minute, second, millisecond, or the like. This is not limited in this embodiment of this application.

For example, it is assumed that a binary value of the termination duration field is 0111, and the time unit of the first duration is second. If the termination duration field directly indicates the first duration, the first duration is 7 seconds. If the termination duration field indicates the first duration in an exponential manner, the first duration may be *M*^{7+*n*} seconds, where M is a positive integer greater than 1. For example, M may be 2. This is not limited. *n* is a preset positive integer.

Optionally, when the termination duration field in the termination duration indication field is set to a maximum value, the first indication information may indicate that the second apparatus no longer participates in a sensing measurement session after the first sensing measurement session is terminated.

In an implementation, when the second message is a sensing measurement termination frame, the sensing measurement termination frame may further include a termination duration indication present (termination duration indication present) field, and the termination duration indication present field may be used to carry the second indication information. For example, a field length of the termination duration indication present field is 1 bit. If a bit value of the termination duration indication present field is 0, the second indication information indicates that the second message does not include the first indication information, in other words, the second message does not include the termination duration indication field. If a bit value of the termination duration indication present field is 1, the second indication information indicates that the second message includes the first indication information, in other words, the second message includes the termination duration indication field. For another example, a field length of the termination duration indication present field is 1 bit. If a bit value of the termination duration indication present field is 1, the second indication information indicates that the second message does not include the first indication information, in other words, the second message does not include the termination duration indication field. If a bit value of the termination duration indication present field is 0, the second indication information indicates that the second message includes the first indication information, in other words, the second message includes the termination duration indication field.

Optionally, the termination duration indication present field may be a subfield of a measurement session termination control (measurement session termination control) field. To be specific, the second message includes the measurement session termination control field, and the termination duration indication present field is carried in the measurement session termination control field, in other words, the second indication information is carried in the measurement session termination control field.

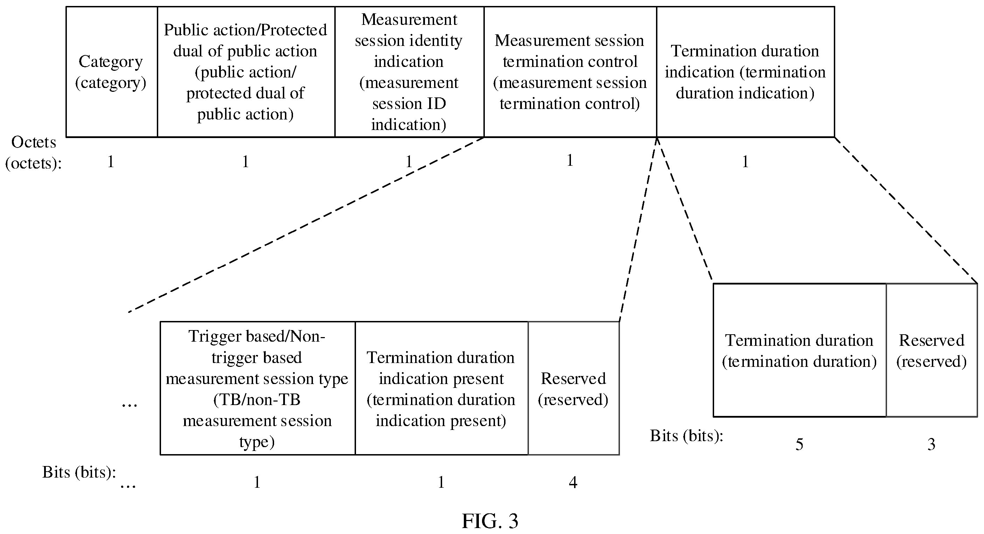

FIG. 3 is an example of a diagram of a structure of a sensing measurement termination frame according to an embodiment of this application. As shown in FIG. 3, the sensing measurement termination frame (that is, the second message) may include but is not limited to one or more of the following fields: category (category), public action/protected dual of public action (public action/protected dual of public action), measurement session identity indication (measurement session identity indication, which may be referred to as measurement session ID indication for short), measurement session termination control (measurement session termination control), and termination duration indication (termination duration indication). The measurement session termination control field may include but is not limited to one or more of the following subfields: trigger based/non-trigger based measurement session type (trigger based/non-trigger based measurement session type, which may be referred to as TB/non-TB measurement session type for short), termination duration indication present (termination duration indication present), and reserved (reserved). The termination duration indication field may include but is not limited to one or more of the following subfields: termination duration (termination duration) and reserved (reserved).

For specific meanings of fields other than the termination duration indication field, the termination duration indication present field, and the termination duration field in the sensing measurement termination frame shown in FIG. 3, refer to related descriptions in the 802.11 series protocols. Details are not described herein.

It should be noted that a structure of an action field (action field) of the sensing measurement termination frame is merely an example, and this embodiment of this application is not limited thereto. For example, the termination duration indication field may be located after the measurement session termination control field as shown in the example in FIG. 3, or may be located before the measurement session termination control field, or may be located at any location of the action field (or an action field) of the sensing measurement termination frame. This is not limited. For another example, the termination duration indication present field may be carried in the measurement session termination control field as shown in the example in FIG. 3, or may not be carried in the measurement session termination control field, or may be located at any location of the action field (or an action field) of the sensing measurement termination frame. This is not limited. In addition, a field length of the termination duration indication field, a field length of the termination duration field, and a field length of the termination duration indication present field in FIG. 3 are merely examples. This is not limited in this embodiment of this application. For example, the field length of the termination duration field may be 5 bits as shown in the example in FIG. 3, or may be greater than 5 bits, or may be less than 5 bits. This is not limited.

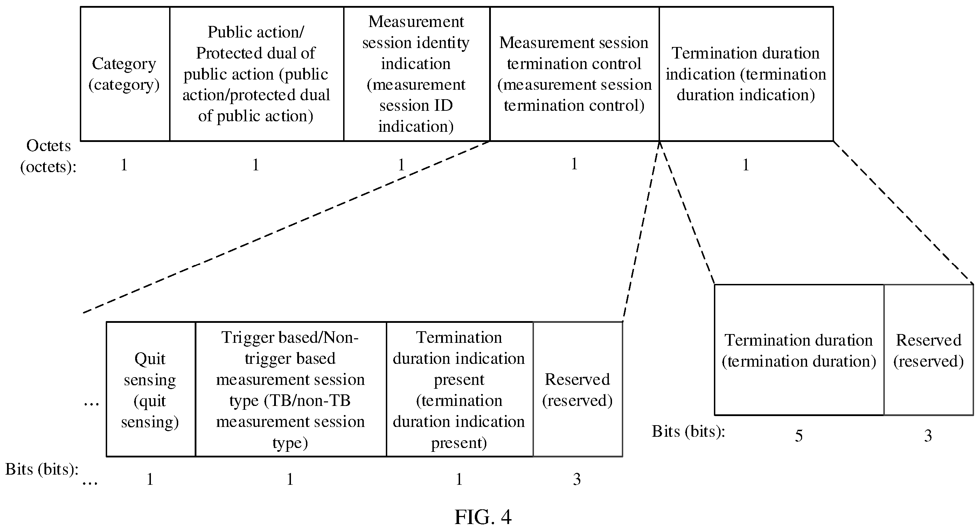

FIG. 4 is an example of a diagram of a structure of another sensing measurement termination frame according to an embodiment of this application. As shown in FIG. 4, based on the structure of the sensing measurement termination frame shown in FIG. 3, the measurement session termination control field in the sensing measurement termination frame (that is, the second message) may further include a second field, that is, the second field is a subfield of the measurement session termination control field. In FIG. 4, the second field is denoted as a quit sensing (quit sensing) field. For descriptions of the second field, refer to the foregoing content. Details are not described herein again. In addition, for remaining fields in the embodiment shown in FIG. 4, refer to the content in the embodiment shown in FIG. 3. Details are not described again.

It should be noted that, the quit sensing field may be carried in the measurement session termination control field as shown in the example in FIG. 4, or may not be carried in the measurement session termination control field, or may be located at any location of the action field (or an action field) of the sensing measurement termination frame. This is not limited. In addition, a field length of the quit sensing field may be 1 bit as shown in the example in FIG. 4, or may be more bits. This is not limited.

In an implementation, for DMG sensing, the second message may be a DMG sensing measurement termination frame, the DMG sensing measurement termination frame may include a DMG termination duration indication (DMG termination duration indication) field, and the DMG termination duration indication field is used to carry the first indication information. For example, when the second message is the DMG sensing measurement termination frame, the DMG sensing measurement termination frame may include but is not limited to one or more fields shown in Table 1.

**Table 1**

| Order (order) | Field name |
|---|---|
| 1 | Category (category) |
| 2 | Protected/unprotected DMG action (protected/unprotected DMG action) |
| 3 | DMG measurement session identity (DMG measurement session identity) |
| 4 | DMG sensing measurement termination control (DMG sensing measurement termination control) |
| 5 | DMG termination duration indication (DMG termination duration indication) |

For specific meanings of remaining fields other than the DMG termination duration indication field in Table 1, refer to related descriptions in the 802.11 series protocols. Details are not described herein.

In an implementation, the DMG termination duration indication field may include a termination duration (termination duration) field, and the termination duration field may indicate the first duration. The termination duration field may directly indicate the first duration, or the termination duration field may indicate the first duration in an exponential manner. This is not limited. The termination duration field may also be referred to as a subfield of the DMG termination duration indication field. This is not limited. The DMG termination duration indication field may further include another subfield, for example, include a reserved (reserved) subfield. This is not limited.

Optionally, when the termination duration field in the DMG termination duration indication field is set to a maximum value, the first indication information may indicate that the second apparatus no longer participates in a sensing measurement session after the first sensing measurement session is terminated.

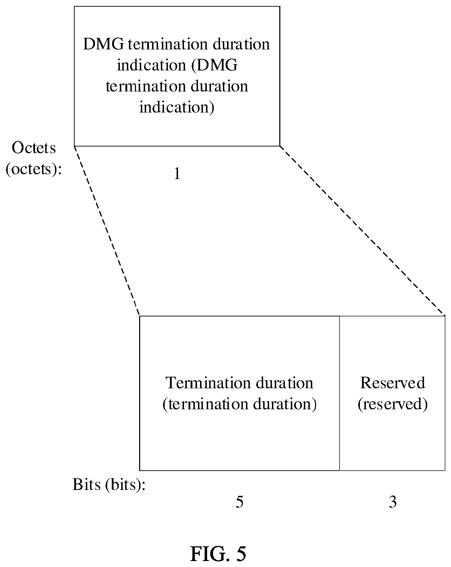

FIG. 5 is an example of a diagram of a structure of a DMG termination duration indication field according to an embodiment of this application. As shown in FIG. 5, the DMG termination duration indication field may include but is not limited to one or more of the following subfields: termination duration (termination duration) and reserved (reserved). It should be noted that a structure of the DMG termination duration indication field is merely an example, and this embodiment of this application is not limited thereto. For example, the field length of the termination duration field may be 5 bits as shown in the example in FIG. 5, or may be greater than 5 bits, or may be less than 5 bits. This is not limited.

In an implementation, when the second message is a DMG sensing measurement termination frame, the DMG sensing measurement termination frame may further include a DMG termination duration indication present (DMG termination duration indication present) field, and the DMG termination duration indication present field may be used to carry the second indication information. For example, a field length of the DMG termination duration indication present field is 1 bit. If a bit value of the DMG termination duration indication present field is 0, the second indication information indicates that the second message does not include the first indication information, in other words, the second message does not include the DMG termination duration indication field. If a bit value of the DMG termination duration indication present field is 1, the second indication information indicates that the second message includes the first indication information, in other words, the second message includes the DMG termination duration indication field. For another example, a field length of the DMG termination duration indication present field is 1 bit. If a bit value of the DMG termination duration indication present field is 1, the second indication information indicates that the second message does not include the first indication information, in other words, the second message does not include the DMG termination duration indication field. If a bit value of the DMG termination duration indication present field is 0, the second indication information indicates that the second message includes the first indication information, in other words, the second message includes the DMG termination duration indication field.

Optionally, the DMG termination duration indication present field may be a subfield of the DMG sensing measurement termination control (DMG sensing measurement termination control) field, that is, the second message includes the DMG sensing measurement termination control field, and the DMG termination duration indication present field is carried in the DMG sensing measurement termination control field, in other words, the second indication information is carried in the DMG sensing measurement termination control field. For details, refer to the content shown in FIG. 4. Details are not described again. It should be understood that, a location of the DMG termination duration indication present field in the DMG sensing measurement termination frame and a field length of the DMG termination duration indication present field are not limited in this embodiment of this application.

In an implementation, when the second message is a DMG sensing measurement termination frame, the DMG sensing measurement termination frame may further include a second field, and the second field may be, for example, a DMG quit sensing (DMG quit sensing) field. Optionally, the DMG quit sensing field may be carried in the DMG sensing measurement termination control field. This is not limited. For descriptions of the second field, similarly refer to the foregoing content. Details are not described again. It should be understood that, a location of the DMG quit sensing field in the DMG sensing measurement termination frame and a field length of the DMG quit sensing field are not limited in this embodiment of this application.

It should be noted that names of the foregoing fields are merely examples, and this embodiment of this application is not limited thereto. For example, the termination duration indication duration field may also be referred to as a termination time of duration indication field, an ending (or closing) duration indication field, an ending (or closing) time of duration indication field, or the like. The DMG termination duration indication field may also be referred to as a DMG termination time of duration indication field, a DMG ending (or closing) duration indication field, a DMG ending (or closing) time of duration indication field, or the like. This is not limited. For example, the termination duration field may also be referred to as a termination time of duration field, an ending duration field, an ending time of duration field, or the like. This is not limited. For another example, the quit sensing field may also be referred to as a terminate sensing field, an end sensing field, or the like, and the DMG quit sensing field may also be referred to as a DMG terminate sensing field, a DMG end sensing field, or the like. This is not limited. For another example, for DMG sensing, the termination duration field may also be referred to as a DMG termination duration field, a DMG termination time of duration field, a DMG ending duration field, a DMG ending time of duration field, or the like. This is not limited.

In the scenario 1_1, the second message is used to request to terminate the first sensing measurement session. After receiving the second message, the first apparatus may terminate the first sensing measurement session based on the second message. Similarly, the second apparatus may also terminate the first sensing measurement session. Terminating the first sensing measurement session may be understood as releasing a resource corresponding to the first sensing measurement session.

In the scenario 1_1, the second apparatus includes the first indication information in the sensing measurement termination frame (or the DMG sensing measurement termination frame) for sending to the first apparatus. The sensing measurement termination frame (or the DMG sensing measurement termination frame) is enhanced. This can optimize a time interaction problem in sensing measurement session termination, and time for participating in a next sensing measurement session after the first sensing measurement session is terminated is more flexible.

For example, if the first indication information indicates that the second apparatus requests the first apparatus not to send the first message to the second apparatus within the first duration after the first sensing measurement session is terminated, based on the first indication information, the first apparatus may not send the first message to the second apparatus within the first duration after the first sensing measurement session is terminated, that is, not initiate a new sensing measurement session to the second apparatus within the first duration after the first sensing measurement session is terminated. Optionally, based on the first indication information, the first apparatus may send the first message to the second apparatus after the first duration after the first sensing measurement session is terminated, that is, initiate a new sensing measurement session to the second apparatus after the first duration after the first sensing measurement session is terminated. In this way, the sensing responder may flexibly adjust, according to a service requirement of the sensing responder or the like, time for re-participating in establishing a sensing measurement session. The sensing initiator can determine an intent of the sensing responder by using the first indication information, thereby avoiding resource consumption caused because the sensing initiator does not know the intent of the sensing responder and initiates a sensing measurement session to the sensing responder within the first duration after the first sensing measurement session is terminated.

For another example, if the first indication information indicates that the second apparatus does not send the first message to the first apparatus within the first duration after the first sensing measurement session is terminated, based on the first indication information, the first apparatus may respond, within the first duration after the first sensing measurement session is terminated, to a sensing measurement session establishment request initiated by another sensing initiator (a sensing initiator other than the second apparatus). In this way, the sensing initiator may flexibly adjust time for establishing a sensing measurement session with each sensing responder. This can increase fairness of initiating a sensing measurement session by the sensing initiator in a communication environment in which there are a plurality of sensing responders. The sensing responder can determine an intent of the sensing initiator by using the first indication information, to respond, within the first duration after the first sensing measurement session is terminated, to a sensing measurement session establishment request initiated by another sensing initiator.

For another example, if the first indication information indicates that the second apparatus no longer participates in a sensing measurement session after the first sensing measurement session is terminated, based on the first indication information, the first apparatus may no longer send the first message to the second apparatus after the first sensing measurement session is terminated, that is, no longer initiate a new sensing measurement session to the second apparatus after the first sensing measurement session is terminated. In this way, the sensing responder may determine not to participate in a sensing measurement session according to a situation of the sensing responder; and based on the first indication information, the sensing initiator may no longer send the first message to the sensing responder after the first sensing measurement session is terminated, thereby avoiding resource consumption caused because the sensing initiator does not know that the sensing responder no longer participates in a sensing measurement session and still sends the first message to the sensing responder.

The following describes a specific implementation in the scenario 1_2 with reference to S201B and S202B.

S201B: The second apparatus sends a second message to the first apparatus.

Correspondingly, the first apparatus receives the second message from the second apparatus.

The second message may include first indication information. In the scenario 1_2, the first indication information may indicate that the second apparatus does not send a first message to the first apparatus within first duration after a first sensing measurement session is terminated. For details, refer to the foregoing content. Details are not described again. Correspondingly, the first apparatus may be a sensing responder, and the second apparatus may be a sensing initiator.

In an implementation, the second message may further include second indication information. The second indication information may indicate that the second message includes the first indication information, or the second indication information may indicate that the second message does not include the first indication information. In this way, the first apparatus may determine, by parsing the second indication information, whether the second message includes the first indication information. In this embodiment of this application, an example in which the second indication information indicates that the second message includes the first indication information is used for description.

In the scenario 1_2, the second message may be used to request to establish the first sensing measurement session. For example, the second message may be a sensing measurement request (sensing measurement request) frame, or the second message may be a DMG sensing measurement request (DMG sensing measurement request) frame.

In an implementation, for sensing (that is, sub-7 GHz sensing), the second message may be a sensing measurement request frame, the sensing measurement request frame may include a termination duration (termination duration) field, and the termination duration field is used to carry the first indication information. For example, the termination duration field may indicate the first duration. Specifically, the termination duration field may directly indicate the first duration, or the termination duration field may indicate the first duration in an exponential manner. For details, refer to the foregoing content. Details are not described again. Optionally, the termination duration field may be carried in a sensing measurement parameters element (sensing measurement parameters element) field in the sensing measurement request frame. For example, the termination duration field may be carried in a sensing measurement parameters field of the sensing measurement parameters element field. This is not limited.

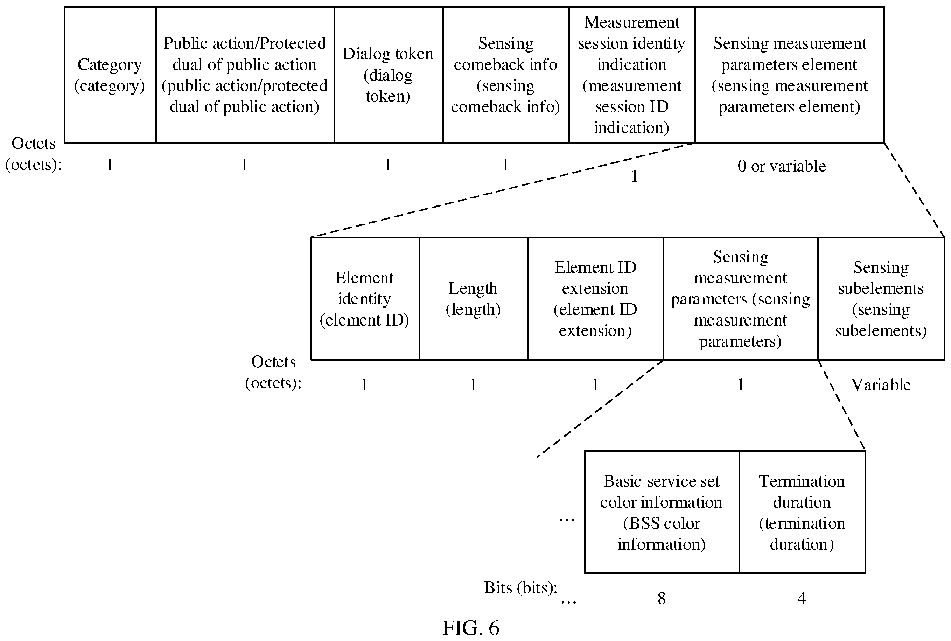

FIG. 6 is an example of a diagram of a structure of a sensing measurement request frame according to an embodiment of this application. As shown in FIG. 6, the sensing measurement request frame (that is, the second message) may include but is not limited to one or more of the following fields: category (category), public action/protected dual of public action (public action/protected dual of public action), dialog token (dialog token), sensing comeback info (sensing comeback info), measurement session identity indication (measurement session ID indication), and sensing measurement parameters element (sensing measurement parameters element). The sensing measurement parameters element field may include but is not limited to one or more of the following fields: element identity (element ID), length (length), element ID extension (element ID extension), sensing measurement parameters (sensing measurement parameters), and sensing subelements (sensing subelements). The sensing measurement parameters field may include but is not limited to one or more of the following subfields: basic service set color information (basic service set color information, which may be referred to as BSS color information for short) and termination duration (termination duration).

For specific meanings of fields other than the termination duration field in FIG. 6, refer to related descriptions in the 802.11 series protocols. Details are not described herein.

It should be noted that a structure of an action field (action field) of the sensing measurement request frame is merely an example, and this embodiment of this application is not limited thereto. For example, the termination duration field may be carried in the sensing measurement parameters field, or may not be carried in the sensing measurement parameters field, or may be located at any location of the action field (or an action field) of the sensing measurement request frame. This is not limited. In addition, a field length of the termination duration field in FIG. 6 is merely an example. This is not limited in this embodiment of this application. For example, the field length of the termination duration field may be 4 bits as shown in the example in FIG. 6, or may be greater than 4 bits, or may be less than 4 bits. This is not limited.

Optionally, when the second message is the sensing measurement request frame, the sensing measurement request frame may further include a termination duration present (termination duration present) field, which is not shown in FIG. 6. The termination duration present field may be used to carry the second indication information, and the second indication information may indicate whether the sensing measurement request frame includes the termination duration field. For details, similarly refer to the foregoing description of the termination duration indication present field. Details are not described again. It should be understood that a location of the termination duration present field in the sensing measurement request frame and a field length of the termination duration present field are not limited in this embodiment of this application.

In an implementation, for DMG sensing, the second message may be a DMG sensing measurement request frame, the DMG sensing measurement request frame may include a termination duration (termination duration) field, and the termination duration field is used to carry the first indication information. For example, the termination duration field indicates the first duration. Specifically, the termination duration field may directly indicate the first duration, or the termination duration field may indicate the first duration in an exponential manner. This is not limited. Optionally, the termination duration field may be carried in a DMG sensing measurement session element (DMG sensing measurement session element) field in the DMG sensing measurement request frame. It should be noted that the termination duration field may be located at any location of an action field (or an action field) of the DMG sensing measurement request frame. This is not limited. In addition, a field length of the termination duration field is not limited in this embodiment of this application.

Optionally, when the second message is the DMG sensing measurement request frame, the DMG sensing measurement request frame may further include a termination duration present field. The termination duration present field may be used to carry the second indication information, and the second indication information may indicate whether the DMG sensing measurement request frame includes the termination duration field. For details, similarly refer to the foregoing description of the termination duration indication present field. Details are not described again. It should be understood that a location of the termination duration present field in the sensing measurement request frame and a field length of the termination duration present field are not limited in this embodiment of this application.

It should be noted that names of the foregoing fields are merely examples, and this embodiment of this application is not limited thereto. For example, the termination duration field may also be referred to as an ending duration field, a termination duration indication field, or the like. This is not limited. For another example, for DMG sensing, the termination duration field may also be referred to as a DMG termination duration field, a DMG termination duration indication field, a DMG ending duration field, or the like. This is not limited. For another example, for DMG sensing, the termination duration present field may also be referred to as a DMG termination duration present field, a DMG termination duration indication present field, a DMG ending duration present field, or the like. This is not limited.

In the scenario 1_2, the second apparatus includes the first indication information in the sensing measurement request frame (or the DMG sensing measurement request frame) for sending to the first apparatus. The sensing measurement request frame (or the DMG sensing measurement request frame) is enhanced. This can optimize a time interaction problem in sensing measurement session termination, and time for participating in a next sensing measurement session after the first sensing measurement session is terminated is more flexible.

Further, after receiving the second message, the first apparatus may send a response message for the second message to the second apparatus in response to the second message, that is, perform content of S202B.

S202B: The first apparatus sends the response message for the second message to the second apparatus.

Correspondingly, the second apparatus receives the response message for the second message from the first apparatus.

S202B is an optional step, and is represented by a dashed line in FIG. 2.

The response message for the second message may be used to respond to an establishment request for the first sensing measurement session. The response message for the second message may indicate that establishment of the first sensing measurement session is accepted, or indicate that establishment of the first sensing measurement session is declined. In this embodiment of this application, an example in which establishment of the first sensing measurement session is accepted is used for description. For example, the response message for the second message may be a sensing measurement response (sensing measurement response) frame, or the response message for the second message may be a DMG sensing measurement response (DMG sensing measurement response) frame.

After the first sensing measurement session is successfully established, the first apparatus and the second apparatus may terminate the first sensing measurement session based on a measurement session expiry exponent. For details, refer to the foregoing content. Details are not described again. Further, the second apparatus does not send the first message to the first apparatus within the first duration after the first sensing measurement session is terminated, that is, does not initiate a new sensing measurement session to the first apparatus within the first duration after the first sensing measurement session is terminated. Optionally, the second apparatus may send the first message to the first apparatus after the first duration after the first sensing measurement session is terminated, that is, initiate a new sensing measurement session to the first apparatus after the first duration after the first sensing measurement session is terminated. Based on the first indication information, the first apparatus may respond, within the first duration after the first sensing measurement session is terminated, to a sensing measurement session establishment request initiated by another sensing initiator. In this way, the sensing initiator may flexibly adjust time for establishing a sensing measurement session with each sensing responder. This can increase fairness of initiating a sensing measurement session by the sensing initiator in a communication environment in which there are a plurality of sensing responders. The sensing responder can determine an intent of the sensing initiator by using the first indication information, to respond, within the first duration after the first sensing measurement session is terminated, to a sensing measurement session establishment request initiated by another sensing initiator.

The following describes a specific implementation in the scenario 1_2 with reference to S201C and S202C.

S201C: A first apparatus sends a fifth message to a second apparatus.

Correspondingly, the second apparatus receives the fifth message from the first apparatus.

S201C is an optional step, and is represented by a dashed line in FIG. 2.

In the scenario 1_3, the fifth message may be used to request to establish a first sensing measurement session. For example, the fifth message may be a sensing measurement request (sensing measurement request) frame, or the fifth message may be a DMG sensing measurement request (DMG sensing measurement request) frame. Correspondingly, the first apparatus may be a sensing initiator, and the second apparatus may be a sensing responder.

S202C: The second apparatus sends a second message to the first apparatus.

Correspondingly, the first apparatus receives the second message from the second apparatus.

The second message may include first indication information. In the scenario 1_3, the first indication information may indicate that the second apparatus requests the first apparatus not to send a first message to the second apparatus within first duration after the first sensing measurement session is terminated; or the first indication information may indicate that the second apparatus no longer participates in a sensing measurement session after the first sensing measurement session is terminated. For details, refer to the foregoing content. Details are not described again.

In an implementation, the second message may include a second field, and the second field may be used to carry the first indication information, and indicate that the second apparatus no longer participates in a sensing measurement session after the first sensing measurement session is terminated. For example, the second field may be a quit sensing (quit sensing) field, or the second field may be a DMG quit sensing (DMG quit sensing) field. Specifically, a value of the second field may include a first value and a second value. The first value may indicate that the second apparatus no longer participates in a sensing measurement session after the first sensing measurement session is terminated, and the second value may indicate that the second field is reserved, that is, the second field is a reserved field. For example, a field length of the second field is 1 bit. The first value may be 0, and the second value may be 1; or the first value may be 1, and the second value may be 0. This is not limited. In this implementation, if the value of the second field is the first value, the first indication information may indicate that the second apparatus no longer participates in a sensing measurement session after the first sensing measurement session is terminated.

In another implementation, the second message may not include the second field, and the first duration is set to indicate that the second apparatus no longer participates in a sensing measurement session after the first sensing measurement session is terminated. For example, the first duration may be infinite, or the first duration may be a preset value, for example, a maximum value that can be indicated by the first indication information. In this case, the first indication information may indicate that the second apparatus no longer participates in a sensing measurement session after the first sensing measurement session is terminated.

In another implementation, if the first indication information indicates that the second apparatus requests the first apparatus not to send the first message to the second apparatus within the first duration after the first sensing measurement session is terminated, the second message may further include a second field, that is, the second message may include the first indication information and the second field. A value of the second field may include a first value and a second value. For details, refer to the foregoing content. Details are not described again. In this implementation, the value of the second field is the second value. In this way, the first indication information may indicate that the second apparatus requests the first apparatus not to send the first message to the second apparatus within the first duration after the first sensing measurement session is terminated.

In an implementation, the second message may further include second indication information. The second indication information may indicate that the second message includes the first indication information, or the second indication information may indicate that the second message does not include the first indication information. In this way, the first apparatus may determine, by parsing the second indication information, whether the second message includes the first indication information. In this embodiment of this application, an example in which the second indication information indicates that the second message includes the first indication information is used for description.

In the scenario 1_3, the second message may be used to respond to an establishment request for the first sensing measurement session. For example, the second message is a response message for the fifth message. For example, the second message may be a sensing measurement response (sensing measurement response) frame, or the second message may be a DMG sensing measurement response (DMG sensing measurement response) frame.

In an implementation, for sensing (that is, sub-7 GHz sensing), the second message may be a sensing measurement response frame, the sensing measurement response frame may include a termination duration indication (termination duration indication) field, and the termination duration indication field is used to carry the first indication information. For example, the termination duration indication field may indicate the first duration. Specifically, the termination duration indication field may directly indicate the first duration, or the termination duration indication field may indicate the first duration in an exponential manner. For details, refer to the foregoing content. Details are not described again.

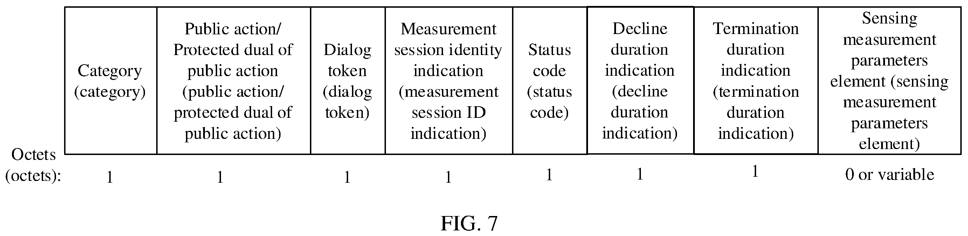

FIG. 7 is an example of a diagram of a structure of a sensing measurement response frame according to an embodiment of this application. As shown in FIG. 7, the sensing measurement response frame (that is, the second message) may include but is not limited to one or more of the following fields: category (category), public action/protected dual of public action (public action/protected dual of public action), dialog token (dialog token), measurement session identity indication (measurement session ID indication), status code (status code), decline duration indication (decline duration indication), termination duration indication (termination duration indication), and sensing measurement parameters element (sensing measurement parameters element). The status code may also be referred to as a state machine. In addition, for specific meanings of fields other than the termination duration indication field in the sensing measurement response frame shown in FIG. 7, refer to related descriptions in the 802.11 series protocols. Details are not described herein.

In an implementation, for DMG sensing, the second message may be a DMG sensing measurement response frame, the DMG sensing measurement response frame may include a DMG termination duration indication (DMG termination duration indication) field, and the DMG termination duration indication field is used to carry the first indication information. For example, the DMG termination duration indication field may indicate the first duration. Specifically, the DMG termination duration indication field may directly indicate the first duration; or the DMG termination duration indication field may indicate the first duration in an exponential manner. This is not limited.

In another implementation, for sensing (that is, sub-7 GHz sensing), the second message may be a sensing measurement response frame, the sensing measurement response frame may include a status code and a first field, and the status code and the first field may be used to carry the first indication information. The status code may also be referred to as a state machine. The first field may indicate the first duration. Specifically, the first field may directly indicate the first duration, or the first field may indicate the first duration in an exponential manner. For details, refer to the foregoing content. Details are not described again. Optionally, a field in the sensing measurement response frame may be reused as the first field. For example, the decline duration indication (decline duration indication) field in the sensing measurement response frame may be reused as the first field. It should be noted that when the decline duration indication field in the sensing measurement response frame is reused as the first field, the first field may still be referred to as the decline duration indication field, or may be referred to as a duration indication (duration indication) field, or may be referred to as a termination duration indication (termination duration indication) field. This is not limited.

For example, the sensing measurement response frame may include one or more of the following:

The status code is success (SUCCESS). In this case, the first indication information may indicate that the second apparatus requests the first apparatus not to send the first message to the second apparatus within the first duration after the first sensing measurement session is terminated.

The status code is declined (REQUEST_DECLINED). In this case, the first indication information may indicate that the second apparatus requests the first apparatus not to send the first message to the second apparatus within the first duration after establishment of the first sensing measurement session is declined.

The status code is rejected with suggestion (REJECTED_WITH_SUGGESTED_CHANGES). In this case, the first indication information may indicate that the second apparatus requests the first apparatus not to send the first message to the second apparatus within the first duration after the first sensing measurement session is terminated.

That the first indication information indicates that the second apparatus requests the first apparatus not to send the first message to the second apparatus within the first duration after establishment of the first sensing measurement session is declined may be replaced with: the first indication information indicates the first apparatus not to send the first message to the second apparatus within the first duration after establishment of the first sensing measurement session is declined; or may be replaced with: the first indication information indicates that the second apparatus requests the first apparatus to send the first message to the second apparatus after the first duration after establishment of the first sensing measurement session is declined; or may be replaced with: the first indication information indicates the first apparatus to send the first message to the second apparatus after the first duration after establishment of the first sensing measurement session is declined; or may be replaced with: the first indication information indicates that the second apparatus requests the first apparatus not to initiate a new sensing measurement session within the first duration after establishment of the first sensing measurement session is declined; or may be replaced with: the first indication information indicates the first apparatus not to initiate a new sensing measurement session within the first duration after establishment of the first sensing measurement session is declined; or may be replaced with: the first indication information indicates that the second apparatus requests the first apparatus not to initiate a new sensing measurement session to the second apparatus within the first duration after establishment of the first sensing measurement session is declined; or may be replaced with: the first indication information indicates the first apparatus not to initiate a new sensing measurement session to the second apparatus within the first duration after establishment of the first sensing measurement session is declined.

In this embodiment of this application, the status code in the sensing measurement response frame is success (SUCCESS), or the status code in the sensing measurement response frame is rejected with suggestion (REJECTED_WITH_SUGGESTED_CHANGES).

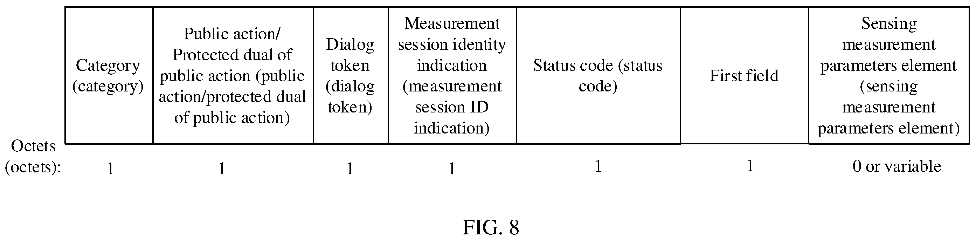

FIG. 8 is an example of a diagram of a structure of another sensing measurement response frame according to an embodiment of this application. As shown in FIG. 8, the sensing measurement response frame (that is, the second message) may include but is not limited to one or more of the following fields: category (category), public action/protected dual of public action (public action/protected dual of public action), dialog token (dialog token), measurement session identity indication (measurement session ID indication), status code (status code), first field, and sensing measurement parameters element (sensing measurement parameters element). For specific meanings of fields other than the status code and the first field in the sensing measurement response frame shown in FIG. 8, refer to related descriptions in the 802.11 series protocols. Details are not described herein. In addition, a location of the first field in the sensing measurement response frame and a field length of the first field are not limited in this embodiment of this application. Similarly, a location of the status code in the sensing measurement response frame and a field length of the status code are not limited in this embodiment of this application.

In another implementation, for DMG sensing, the second message may be a DMG sensing measurement response frame, the DMG sensing measurement response frame may include a status code and a first field, and the status code and the first field may be used to carry the first indication information. The status code may also be referred to as a state machine. The first field may indicate the first duration. Specifically, the first field may directly indicate the first duration, or the first field may indicate the first duration in an exponential manner. This is not limited. Optionally, a field in the sensing measurement response frame may be reused as the first field. For example, the first field may be referred to as a decline duration indication (decline duration indication) field, or may be referred to as a duration indication (duration indication) field, or may be referred to as a termination duration indication (termination duration indication) field. This is not limited.

For example, the DMG sensing measurement response frame may include one or more of the following:
The status code is success (SUCCESS). In this case, the first indication information may indicate that the second apparatus requests the first apparatus not to send the first message to the second apparatus within the first duration after the first sensing measurement session is terminated.

The status code is declined (REQUEST_DECLINED). In this case, the first indication information may indicate that the second apparatus requests the first apparatus not to send the first message to the second apparatus within the first duration after establishment of the first sensing measurement session is declined.

The status code is rejected with suggestion (REJECTED_WITH_SUGGESTED_CHANGES). In this case, the first indication information may indicate that the second apparatus requests the first apparatus not to send the first message to the second apparatus within the first duration after the first sensing measurement session is terminated.

The first indication information indicates that the second apparatus requests the first apparatus not to send the first message to the second apparatus within the first duration after establishment of the first sensing measurement session is declined. For details, refer to the foregoing content. Details are not described again.

In this embodiment of this application, the status code in the DMG sensing measurement response frame is success (SUCCESS), or the status code in the DMG sensing measurement response frame is rejected with suggestion (REJECTED_WITH_SUGGESTED_CHANGES).

For example, when the second message is the DMG sensing measurement response frame, the DMG sensing measurement response frame may include but is not limited to one or more fields shown in Table 2.

**Table 2**

| Order (order) | Field name |
|---|---|
| 1 | Category (category) |
| 2 | Protected/unprotected DMG action (protected/unprotected DMG action) |
| 3 | Dialog token (dialog token) |
| 4 | DMG measurement session identity (DMG measurement session identity) |
| 5 | Status code (status code) |
| 6 | First field (for example, a decline duration indication (decline duration indication) field) |
| 7 | DMG sensing measurement session element (DMG sensing measurement session element) |
| 8 | DMG sensing image range axis look up table (look up table, LUT) (DMG sensing image range axis LUT) |
| 9 | DMG sensing image doppler axis look up table (DMG sensing image |
| | doppler axis LUT) |
| 10 | DMG sensing instance duration element (DMG sensing instance duration element) |

For specific meanings of remaining fields other than the status code and the first field in Table 2, refer to related descriptions in the 802.11 series protocols. Details are not described herein. In addition, a location of the first field in the DMG sensing measurement response frame and a field length of the first field are not limited in this embodiment of this application. Similarly, a location of the status code in the sensing measurement response frame and a field length of the status code are not limited in this embodiment of this application.

Optionally, for sensing (that is, sub-7 GHz sensing), the second message may be a sensing measurement response frame, and the sensing measurement response frame may further include a termination duration indication present field, or may further include a quit sensing field, or may further include a termination duration indication present field and a quit sensing field, which are not shown in FIG. 7 or FIG. 8. For the termination duration indication present field and the quit sensing field, refer to the foregoing content. Details are not described again. In addition, a location of the termination duration indication present field in the sensing measurement response frame and a field length of the termination duration indication present field are not limited in this embodiment of this application. Similarly, a location of the quit sensing field in the sensing measurement response frame and a field length of the quit sensing field are not limited in this embodiment of this application.

Optionally, for DMG sensing, the second message may be a DMG sensing measurement response frame, and the DMG sensing measurement response frame may further include a DMG termination duration indication present field, or may further include a DMG quit sensing field, or may further include a DMG termination duration indication present field and a DMG quit sensing field, which are not shown in Table 2. For the DMG termination duration indication present field and the DMG quit sensing field, refer to the foregoing content. Details are not described again. In addition, a location of the DMG termination duration indication present field in the DMG sensing measurement response frame and a field length of the DMG termination duration indication present field are not limited in this embodiment of this application. Similarly, a location of the DMG quit sensing field in the DMG sensing measurement response frame and a field length of the DMG quit sensing field are not limited in this embodiment of this application.

In the scenario 1_3, the second apparatus includes the first indication information in the sensing measurement response frame (or the DMG sensing measurement response frame) for sending to the first apparatus. The sensing measurement response frame (or the DMG sensing measurement response frame) is enhanced. This can optimize a time interaction problem in sensing measurement session termination, and time for participating in a next sensing measurement session after the first sensing measurement session is terminated is more flexible.

After the first sensing measurement session is successfully established, the first apparatus and the second apparatus may terminate the first sensing measurement session based on a measurement session expiry exponent. Further, if the first indication information indicates that the second apparatus requests the first apparatus not to send the first message to the second apparatus within the first duration after the first sensing measurement session is terminated, based on the first indication information, the first apparatus may not send the first message to the second apparatus within the first duration after the first sensing measurement session is terminated, that is, not initiate a new sensing measurement session to the second apparatus within the first duration after the first sensing measurement session is terminated. Optionally, based on the first indication information, the first apparatus may send the first message to the second apparatus after the first duration after the first sensing measurement session is terminated, that is, initiate a new sensing measurement session to the second apparatus after the first duration after the first sensing measurement session is terminated. In this way, the sensing responder may flexibly adjust, according to a service requirement of the sensing responder or the like, time for re-participating in establishing a sensing measurement session. The sensing initiator can determine an intent of the sensing responder by using the first indication information, thereby avoiding resource consumption caused because the sensing initiator does not know the intent of the sensing responder and initiates a sensing measurement session to the sensing responder within the first duration after the first sensing measurement session is terminated.

If the first indication information indicates that the second apparatus no longer participates in a sensing measurement session after the first sensing measurement session is terminated, based on the first indication information, the first apparatus may no longer send the first message to the second apparatus after the first sensing measurement session is terminated, that is, no longer initiate a new sensing measurement session to the second apparatus after the first sensing measurement session is terminated. In this way, the sensing responder may determine not to participate in a sensing measurement session according to a situation of the sensing responder; and based on the first indication information, the sensing initiator may no longer send the first message to the sensing responder after the first sensing measurement session is terminated, thereby avoiding resource consumption caused because the sensing initiator does not know that the sensing responder no longer participates in a sensing measurement session and still sends the first message to the sensing responder.

The embodiment shown in FIG. 2 optimizes a time problem in sensing measurement session termination. In another possible implementation, embodiments of this application provide another sensing method and a communication apparatus, to optimize a time interaction problem in SBP procedure termination, so that time for participating in a next SBP procedure after an SBP procedure is terminated is more flexible.

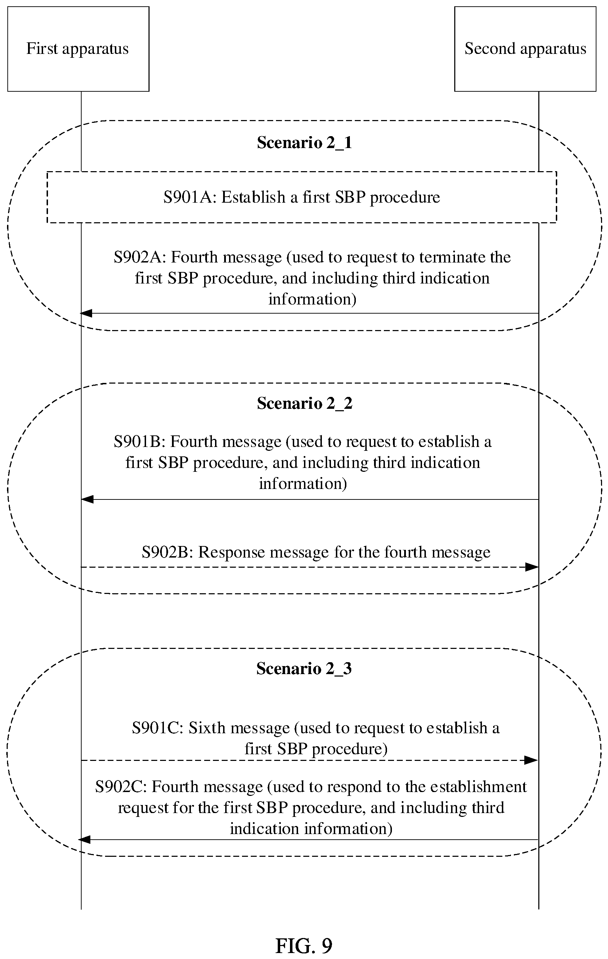

FIG. 9 is a schematic flowchart of another sensing method according to an embodiment of this application. When the method procedure provided in this embodiment of this application is applied to the system shown in FIG. 1, the AP or a chip in the AP or the STA or a chip in the STA in FIG. 1 may perform a method performed by a first apparatus in the following procedure, or the AP or a chip in the AP or the STA or a chip in the STA in FIG. 1 may perform a method performed by a second apparatus in the following procedure. It may be understood that a specific structure of an execution body of a method provided in embodiments of this application is not specifically limited in embodiments shown below, provided that a program that records code for the method provided in embodiments of this application can be run to perform communication according to the method provided in embodiments of this application. In addition, dashed lines in FIG. 9 indicate optional steps.

In this embodiment, the second apparatus sends third indication information to the first apparatus. Correspondingly, the first apparatus receives the third indication information from the second apparatus.

In an implementation, the third indication information may indicate that the second apparatus requests (request) the first apparatus not to send a third message to the second apparatus within second duration after a first SBP procedure is terminated. For example, that the third indication information indicates that the second apparatus requests the first apparatus not to send the third message to the second apparatus within the second duration after the first SBP procedure is terminated may be replaced with: the third indication information indicates the first apparatus not to send the third message to the second apparatus within the second duration after the first SBP procedure is terminated; or may be replaced with: the third indication information indicates that the second apparatus requests the first apparatus to send the third message to the second apparatus after the second duration after the first SBP procedure is terminated; or may be replaced with: the third indication information indicates the first apparatus to send the third message to the second apparatus after the second duration after the first SBP procedure is terminated; or may be replaced with: the third indication information indicates that the second apparatus requests the first apparatus not to initiate a new SBP procedure within the second duration after the first SBP procedure is terminated; or may be replaced with: the third indication information indicates the first apparatus not to initiate a new SBP procedure within the second duration after the first SBP procedure is terminated; or may be replaced with: the third indication information indicates that the second apparatus requests the first apparatus not to initiate a new SBP procedure to the second apparatus within the second duration after the first SBP procedure is terminated; or may be replaced with: the third indication information indicates the first apparatus not to initiate a new SBP procedure to the second apparatus within the second duration after the first SBP procedure is terminated. In this case, the first apparatus may be an SBP initiator, and the second apparatus may be an SBP responder.

In another implementation, the third indication information may alternatively indicate that the second apparatus does not send a third message to the first apparatus within second duration after the first SBP procedure is terminated. For example, that the third indication information indicates that the second apparatus does not send the third message to the first apparatus within the second duration after the first SBP procedure is terminated may be replaced with: the third indication information indicates that the second apparatus sends the third message to the first apparatus after the second duration after the first SBP procedure is terminated; or may be replaced with: the third indication information indicates that the second apparatus does not initiate a new SBP procedure within the second duration after the first SBP procedure is terminated; or may be replaced with: the third indication information indicates that the second apparatus does not initiate a new SBP procedure to the first apparatus within the second duration after the first SBP procedure is terminated. In this case, the second apparatus may be an SBP initiator, and the first apparatus may be an SBP responder.

In another implementation, the third indication information may alternatively indicate that the second apparatus no longer participates in an SBP procedure after the first SBP procedure is terminated. For example, that the third indication information indicates that the second apparatus no longer participates in an SBP procedure after the first SBP procedure is terminated may be replaced with: the third indication information indicates that the second apparatus requests the first apparatus not to send a third message to the second apparatus after the first SBP procedure is terminated; or may be replaced with: the third indication information indicates that the second apparatus requests the first apparatus not to initiate a new SBP procedure after the first SBP procedure is terminated; or may be replaced with: the third indication information indicates that the second apparatus requests the first apparatus not to initiate a new SBP procedure to the second apparatus after the first SBP procedure is terminated. In this case, the first apparatus may be an SBP initiator, and the second apparatus may be an SBP responder.

The first SBP procedure is an SBP procedure between the first apparatus and the second apparatus. In an implementation, the first SBP procedure may be an SBP procedure in sensing, or the first SBP procedure may be a DMG SBP procedure in DMG sensing. This is not limited. The third message may be used to request to establish a second SBP procedure. The second SBP procedure is an SBP procedure between the first apparatus and the second apparatus. In other words, the third message may be used to request to establish the second SBP procedure between the first apparatus and the second apparatus. In an implementation, the second SBP procedure may be an SBP procedure in sensing, or the second SBP procedure may be a DMG SBP procedure in DMG sensing. This is not limited. The first SBP procedure and the second SBP procedure are different SBP procedures.

In an implementation, the SBP initiator may be an SBP initiator in sensing, and correspondingly, the SBP responder may be an SBP responder in sensing. In another implementation, the SBP initiator may alternatively be a DMG SBP initiator in DMG sensing, and correspondingly, the SBP responder may alternatively be a DMG SBP responder in DMG sensing.

It should be noted that the term "SBP procedure" may be replaced with "SBP process", or may be replaced with "SBP session", or the like. This is not limited. The term "sending a third message" may be replaced with "initiating an SBP procedure", or may be replaced with "initiating a new SBP procedure", or the like. This is not limited. The term "request" may be replaced with "require", or may be replaced with "expect", or may be replaced with "allow", or the like. This is not limited. The term "participating in an SBP procedure" may be replaced with "establishing an SBP procedure", or may be replaced with "participating in establishing an SBP procedure", or the like.

In an implementation, the second apparatus may send the third indication information to the first apparatus after establishment of the first SBP procedure is completed; or may send the third indication information to the first apparatus in a process of establishing the first SBP procedure. For example, the third indication information may be carried in a fourth message. To be specific, the second apparatus sends the fourth message to the first apparatus, where the fourth message includes the third indication information. In FIG. 9, an example in which the third indication information is carried in the fourth message is used for description in three scenarios (denoted as a scenario 2_1, a scenario 2_2, and a scenario 2_3). Specifically, in the scenario 2_1, the fourth message may be used to request to terminate a first SBP procedure, which corresponds to content of S901A and S902A shown in FIG. 9. In the scenario 2_2, the fourth message may be used to request to establish a first SBP procedure, which corresponds to content of S901B and S902B shown in FIG. 9. In the scenario 2_3, the fourth message may be used to respond to an establishment request for a first SBP procedure, which corresponds to content of S901C and S902C shown in FIG. 9.

As shown in FIG. 9, the method may include the following content.

S901A: A first apparatus and a second apparatus establish a first SBP procedure.

S901A is an optional step, and is represented by a dashed line in FIG. 9.

In the scenario 2_1, the first SBP procedure may be first established between the first apparatus and the second apparatus. In an implementation, the first apparatus is an SBP initiator, the second apparatus is an SBP responder, and the first SBP procedure is an SBP procedure in sensing. A process of establishing the first SBP procedure may be as follows: The first apparatus may send an SBP request (SBP request) frame 1 to the second apparatus, where the SBP request frame 1 may be used to request to establish the first SBP procedure; the second apparatus receives the SBP request frame 1 from the first apparatus, and sends an SBP response (SBP response) frame 1 to the first apparatus; and the first apparatus receives the SBP response frame 1 from the second apparatus. The SBP response frame 1 is used to respond to an establishment request for the first SBP procedure, for example, accept establishment of the first SBP procedure, or decline establishment of the first SBP procedure. In this embodiment, an example in which establishment of the first SBP procedure is accepted is used. It should be understood that, when the first apparatus is an SBP responder, the second apparatus is an SBP initiator, and the first SBP procedure is an SBP procedure in sensing, for a process of establishing the first SBP procedure, refer to the foregoing content. Details are not described again.

In another implementation, the first apparatus may be an SBP responder, the second apparatus may be an SBP initiator, and the first SBP procedure may be a DMG SBP procedure in DMG sensing. A process of establishing the first SBP procedure may be as follows: The second apparatus may send a DMG SBP request (DMG SBP request) frame 2 to the first apparatus, where the DMG SBP request frame 2 may be used to request to establish the first SBP procedure; correspondingly, the first apparatus receives the DMG SBP request frame 2 from the second apparatus, and sends a DMG SBP response (DMG SBP response) frame 2 to the second apparatus; and the second apparatus receives the DMG SBP response frame 2 from the first apparatus. The DMG SBP response frame 2 is used to respond to an establishment request for the first SBP procedure, for example, accept establishment of the first SBP procedure, or decline establishment of the first SBP procedure. In this embodiment, an example in which establishment of the first SBP procedure is accepted is used. It should be understood that, when the first apparatus is an SBP initiator, the second apparatus is an SBP responder, and the first SBP procedure is a DMG SBP procedure in DMG sensing, for a process of establishing the first SBP procedure, refer to the foregoing content. Details are not described again.

In this embodiment of this application, unless otherwise specified, the SBP request frame may be an SBP request frame in sensing, and the SBP response frame may be an SBP response frame in sensing; and the DMG SBP request frame may be an SBP request frame in DMG sensing, and the DMG SBP response frame may be an SBP response frame in DMG sensing.

After establishment of the first SBP procedure is completed, the second apparatus may send a fourth message to the first apparatus, that is, perform content of S902A.

S902A: The second apparatus sends the fourth message to the first apparatus.

Correspondingly, the first apparatus receives the fourth message from the second apparatus.

The fourth message may include third indication information. In the scenario 2_1, the third indication information may indicate that the second apparatus requests the first apparatus not to send a third message to the second apparatus within second duration after the first SBP procedure is terminated; or the third indication information may indicate that the second apparatus does not send a third message to the first apparatus within second duration after the first SBP procedure is terminated; or the third indication information may indicate that the second apparatus no longer participates in an SBP procedure after the first SBP procedure is terminated. For details, refer to the foregoing content. Details are not described again.

In an implementation, the fourth message may include a fourth field, and the fourth field may be used to carry the third indication information, and indicate that the second apparatus no longer participates in an SBP procedure after the first SBP procedure is terminated. For example, the fourth field may be a quit SBP (quit SBP) field, or the fourth field may be a DMG quit SBP (DMG quit SBP) field. Specifically, a value of the fourth field may include a third value and a fourth value. The third value may indicate that the second apparatus no longer participates in an SBP procedure after the first SBP procedure is terminated, and the fourth value may indicate that the fourth field is reserved, that is, the fourth field is a reserved field. For example, a field length of the fourth field is 1 bit. The third value may be 0, and the fourth value may be 1; or the third value may be 1, and the fourth value may be 0. This is not limited. In this implementation, if the value of the fourth field is the third value, the third indication information may indicate that the second apparatus no longer participates in an SBP procedure after the first SBP procedure is terminated.

In another implementation, the fourth message may not include the fourth field, and the second duration is set to indicate that the second apparatus no longer participates in an SBP procedure after the first SBP procedure is terminated. For example, the second duration may be infinite, or the second duration may be a preset value, for example, a maximum value that can be indicated by the third indication information. In this case, the third indication information may indicate that the second apparatus no longer participates in an SBP procedure after the first SBP procedure is terminated.

In another implementation, if the third indication information indicates that the second apparatus requests the first apparatus not to send the third message to the second apparatus within the second duration after the first SBP procedure is terminated, the fourth message may further include a fourth field, that is, the fourth message may include the third indication information and the fourth field. A value of the fourth field may include a third value and a fourth value. For details, refer to the foregoing content. Details are not described again. In this implementation, the value of the fourth field is the fourth value. In this way, the third indication information may indicate that the second apparatus requests the first apparatus not to send the third message to the second apparatus within the second duration after the first SBP procedure is terminated.

In an implementation, the fourth message may further include fourth indication information. The fourth indication information may indicate that the fourth message includes the third indication information, or the fourth indication information may indicate that the fourth message does not include the third indication information. In this way, the first apparatus may determine, by parsing the fourth indication information, whether the fourth message includes the third indication information. In this embodiment of this application, an example in which the fourth indication information indicates that the fourth message includes the third indication information is used for description.

In the scenario 2_1, the fourth message may be used to request to terminate the first SBP procedure. For example, the fourth message may be an SBP procedure termination (SBP termination) frame, or the fourth message may be a DMG SBP termination (DMG SBP termination) frame. In this embodiment of this application, unless otherwise specified, the SBP termination frame may be an SBP termination frame in sensing, and the DMG SBP termination frame may be an SBP termination frame in DMG sensing.

In an implementation, for sensing (that is, sub-7 GHz sensing), the fourth message may be an SBP termination frame, the SBP termination frame may include a termination duration indication (termination duration indication) field, and the termination duration indication field is used to carry the third indication information. For example, a termination duration (termination duration) field in the termination duration indication field may indicate the second duration. Specifically, the termination duration field may directly indicate the second duration, or the termination duration field may indicate the second duration in an exponential manner. This is not limited. The termination duration field may also be referred to as a subfield of the termination duration indication field. This is not limited. The termination duration indication field may further include another subfield, for example, include a reserved (reserved) subfield. This is not limited. In addition, a time unit of the second duration may be minute, second, millisecond, or the like. This is not limited in this embodiment of this application.

For example, it is assumed that a binary value of the termination duration field is 0110, and the time unit of the second duration is second. If the termination duration field directly indicates the second duration, the second duration is 6 seconds. If the termination duration field indicates the second duration in an exponential manner, the second duration may be *M*^{6+*n*} seconds, where M is a positive integer greater than 1. For example, M may be 2. This is not limited. *n* is a preset positive integer.

Optionally, when the termination duration field in the termination duration indication field is set to a maximum value, the third indication information may indicate that the second apparatus no longer participates in an SBP procedure after the first SBP procedure is terminated.

In an implementation, when the fourth message is an SBP termination frame, the SBP termination frame may further include a termination duration indication present (termination duration indication present) field, and the termination duration indication present field may be used to carry the fourth indication information. For example, a field length of the termination duration indication present field is 1 bit. If a bit value of the termination duration indication present field is 0, the fourth indication information indicates that the fourth message does not include the third indication information, in other words, the fourth message does not include the termination duration indication field. If a bit value of the termination duration indication present field is 1, the fourth indication information indicates that the fourth message includes the third indication information, in other words, the fourth message includes the termination duration indication field. For another example, a field length of the termination duration indication present field is 1 bit. If a bit value of the termination duration indication present field is 1, the fourth indication information indicates that the fourth message does not include the third indication information, in other words, the fourth message does not include the termination duration indication field. If a bit value of the termination duration indication present field is 0, the fourth indication information indicates that the fourth message includes the third indication information, in other words, the fourth message includes the termination duration indication field.

Optionally, the termination duration indication present field may be a subfield of an SBP termination control (SBP termination control) field. To be specific, the fourth message includes the SBP termination control field, and the termination duration indication present field is carried in the SBP termination control field, in other words, the fourth indication information is carried in the SBP termination control field.

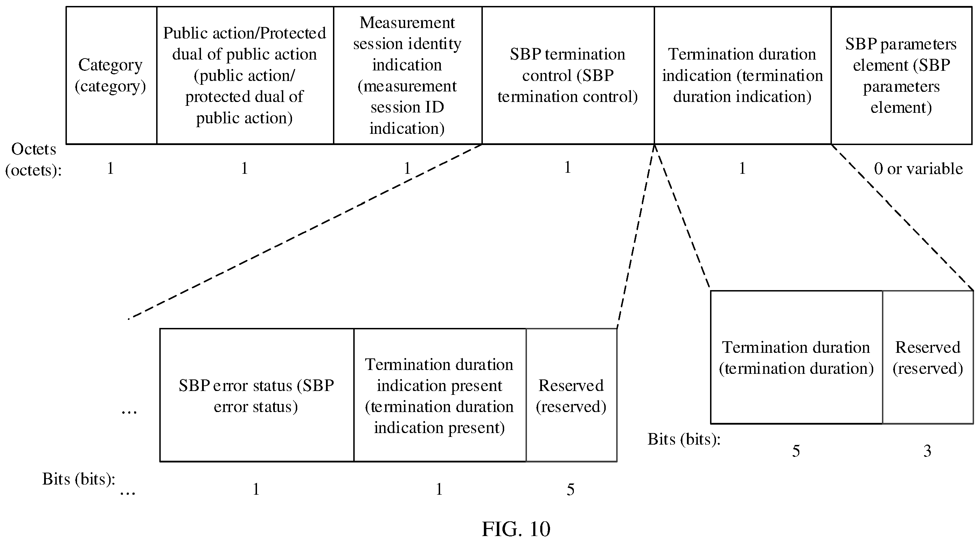

FIG. 10 is an example of a diagram of a structure of an SBP termination frame according to an embodiment of this application. As shown in FIG. 10, the SBP termination frame (that is, the fourth message) may include but is not limited to one or more of the following fields: category (category), public action/protected dual of public action (public action/protected dual of public action), measurement session identity indication (measurement session ID indication), SBP termination control (SBP termination control), termination duration indication (termination duration indication), and SBP parameters element (SBP parameters element). The SBP termination control field may include but is not limited to one or more of the following subfields: SBP error status (SBP error status), termination duration indication present (termination duration indication present), and reserved (reserved). The termination duration indication field may include but is not limited to one or more of the following subfields: termination duration (termination duration) and reserved (reserved).

For specific meanings of fields other than the termination duration indication field, the termination duration indication present field, and the termination duration field in the SBP termination frame shown in FIG. 10, refer to related descriptions in the 802.11 series protocols. Details are not described herein.

It should be noted that a structure of an action field (action field) of the SBP termination frame is merely an example, and this embodiment of this application is not limited thereto. For example, the termination duration indication field may be located after the SBP termination control field as shown in the example in FIG. 10, or may be located before the SBP termination control field, or may be located at any location of the action field (or an action field) of the SBP termination frame. This is not limited. For another example, the termination duration indication present field may be carried in the SBP termination control field as shown in the example in FIG. 10, or may not be carried in the SBP termination control field, or may be located at any location of the action field (or an action field) of the SBP termination frame. This is not limited. In addition, a field length of the termination duration indication field, a field length of the termination duration field, and a field length of the termination duration indication present field in FIG. 10 are merely examples. This is not limited in this embodiment of this application. For example, the field length of the termination duration field may be 5 bits as shown in the example in FIG. 10, or may be greater than 5 bits, or may be less than 5 bits. This is not limited.

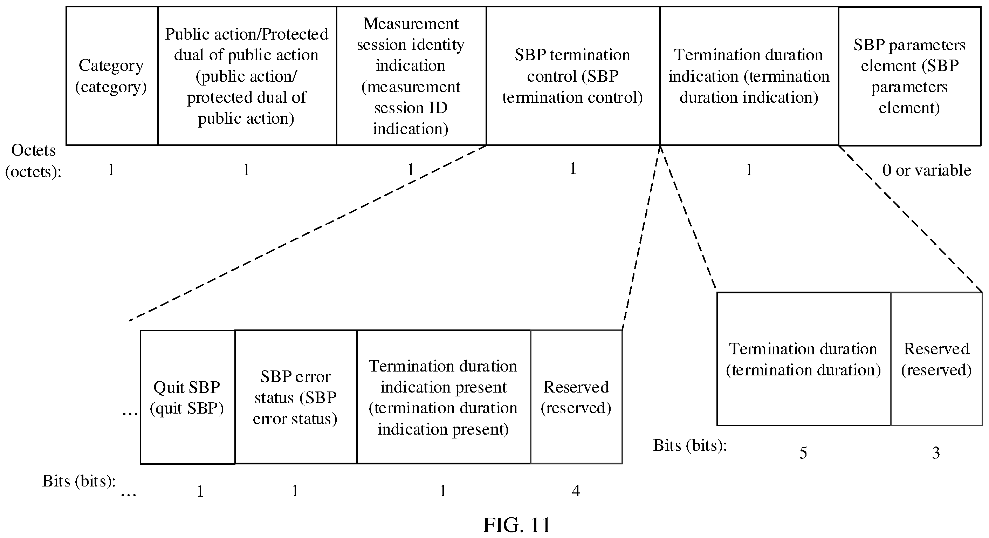

FIG. 11 is an example of a diagram of a structure of another SBP termination frame according to an embodiment of this application. As shown in FIG. 11, based on the structure of the SBP termination frame shown in FIG. 10, the SBP termination control field in the SBP termination frame (that is, the fourth message) may further include a fourth field, that is, the fourth field is a subfield of the SBP termination control field. In FIG. 11, the fourth field is denoted as a quit SBP (quit SBP) field. For descriptions of the fourth field, refer to the foregoing content. Details are not described herein again. In addition, for remaining fields in the embodiment shown in FIG. 11, refer to the content in the embodiment shown in FIG. 10. Details are not described again.

It should be noted that, the quit SBP field may be carried in the SBP termination control field as shown in the example in FIG. 11, or may not be carried in the SBP termination control field, or may be located at any location of the action field (or an action field) of the SBP termination frame. This is not limited. In addition, a field length of the quit SBP field may be 1 bit as shown in the example in FIG. 11, or may be more bits. This is not limited.

In an implementation, for DMG sensing, the fourth message may be a DMG SBP termination frame, the DMG SBP termination frame may include a DMG termination duration indication (DMG termination duration indication) field, and the DMG termination duration indication field is used to carry the third indication information. For example, when the fourth message is the DMG SBP termination frame, the DMG SBP termination frame may include but is not limited to one or more fields shown in Table 3.

**Table 3**

| Order (order) | Field name |
|---|---|
| 1 | Category (category) |
| 2 | Protected/unprotected DMG action (protected/unprotected DMG action) |
| 3 | DMG measurement session identity (DMG measurement session identity) |
| 4 | DMG SBP termination control (DMG SBP termination control) |
| 5 | DMG termination duration indication (DMG termination duration indication) |
| 6 | DMG SBP parameters element (SBP parameters element) |

For specific meanings of remaining fields other than the DMG termination duration indication field in Table 3, refer to related descriptions in the 802.11 series protocols. Details are not described herein.

In an implementation, the DMG termination duration indication field may include a termination duration (termination duration) field, and the termination duration field may indicate the second duration. Specifically, the termination duration field may directly indicate the second duration, or the termination duration field may indicate the second duration in an exponential manner. This is not limited. The termination duration field may also be referred to as a subfield of the DMG termination duration indication field. This is not limited. The DMG termination duration indication field may further include another subfield, for example, include a reserved (reserved) subfield. This is not limited. For a structure of the DMG termination duration indication field, refer to the content shown in FIG. 5. Details are not described herein again.

Optionally, when the termination duration field in the DMG termination duration indication field is set to a maximum value, the third indication information may indicate that the second apparatus no longer participates in an SBP procedure after the first SBP procedure is terminated.

In an implementation, when the fourth message is a DMG SBP termination frame, the DMG SBP termination frame may further include a DMG termination duration indication present (DMG termination duration indication present) field, and the DMG termination duration indication present field may be used to carry the fourth indication information. For example, a field length of the DMG termination duration indication present field is 1 bit. If a bit value of the DMG termination duration indication present field is 0, the fourth indication information indicates that the fourth message does not include the third indication information, in other words, the fourth message does not include the DMG termination duration indication field. If a bit value of the DMG termination duration indication present field is 1, the fourth indication information indicates that the fourth message includes the third indication information, in other words, the fourth message includes the DMG termination duration indication field. For another example, a field length of the DMG termination duration indication present field is 1 bit. If a bit value of the DMG termination duration indication present field is 1, the fourth indication information indicates that the fourth message does not include the third indication information, in other words, the fourth message does not include the DMG termination duration indication field. If a bit value of the DMG termination duration indication present field is 0, the fourth indication information indicates that the fourth message includes the third indication information, in other words, the fourth message includes the DMG termination duration indication field.

Optionally, the DMG termination duration indication present field may be a subfield of the DMG SBP termination control (DMG SBP control) field, that is, the fourth message includes the DMG SBP termination control field, and the DMG termination duration indication present field is carried in the DMG SBP termination control field, in other words, the fourth indication information is carried in the DMG SBP termination control field. For details, refer to the content shown in FIG. 11. Details are not described again. It should be understood that a location of the DMG termination duration indication present field in the DMG SBP termination frame and a field length of the DMG termination duration indication present field are not limited in this embodiment of this application.

In an implementation, when the fourth message is a DMG SBP termination frame, the DMG SBP termination frame may further include a fourth field, and the fourth field may be, for example, a DMG quit SBP (DMG quit SBP) field. Optionally, the DMG quit SBP field may be carried in the DMG SBP termination control field. This is not limited. For descriptions of the fourth field, similarly refer to the foregoing content. Details are not described again. It should be understood that, a location of the DMG quit SBP field in the DMG SBP termination frame and a field length of the DMG quit SBP field are not limited in this embodiment of this application.

It should be noted that names of the foregoing fields are merely examples, and this embodiment of this application is not limited thereto. For example, the termination duration indication duration field may also be referred to as an ending duration indication field, and the DMG termination duration indication field may also be referred to as a DMG ending duration indication field. This is not limited. For example, the termination duration field may also be referred to as an ending duration field. For another example, the quit SBP field may also be referred to as a terminate sensing field or the like, and the DMG quit SBP field may also be referred to as a DMG terminate sensing field or the like. This is not limited. For another example, for DMG sensing, the termination duration field may also be referred to as a DMG termination duration field, a DMG ending duration field, or the like. This is not limited.

It should be noted that names of the foregoing fields are merely examples, and this embodiment of this application is not limited thereto. For example, the termination duration indication duration field may also be referred to as a termination time of duration indication field, an ending (or closing) duration indication field, an ending (or closing) time of duration indication field, or the like. The DMG termination duration indication field may also be referred to as a DMG termination time of duration indication field, a DMG ending (or closing) duration indication field, a DMG ending (or closing) time of duration indication field, or the like. This is not limited. For example, the termination duration field may also be referred to as a termination time of duration field, an ending duration field, an ending time of duration field, or the like. This is not limited. For another example, the quit SBP field may also be referred to as a terminate SBP field, an end SBP field, or the like, and the DMG quit SBP field may also be referred to as a DMG terminate SBP field, a DMG end SBP field, or the like. This is not limited. For another example, for DMG sensing, the termination duration field may also be referred to as a DMG termination duration field, a DMG termination time of duration field, a DMG ending duration field, a DMG ending time of duration field, or the like. This is not limited.

In the scenario 2_1, the fourth message is used to request to terminate the first SBP procedure. After receiving the fourth message, the first apparatus may terminate the first SBP procedure based on the fourth message. Similarly, the second apparatus may also terminate the first SBP procedure. Terminating the first SBP procedure may be understood as releasing a resource corresponding to the first SBP procedure.

In the scenario 2_1, the second apparatus includes the third indication information in the SBP termination frame (or the DMG SBP termination frame) for sending to the first apparatus. The SBP termination frame (or the DMG SBP termination frame) is enhanced. This can optimize a time interaction problem in SBP procedure termination, and time for participating in a next SBP procedure after the first SBP procedure is terminated is more flexible.

For example, if the third indication information indicates that the second apparatus requests the first apparatus not to send the third message to the second apparatus within the second duration after the first SBP procedure is terminated, based on the third indication information, the first apparatus may not send the third message to the second apparatus within the second duration after the first SBP procedure is terminated, that is, not initiate a new SBP procedure to the second apparatus within the second duration after the first SBP procedure is terminated. Optionally, based on the third indication information, the first apparatus may send the third message to the second apparatus after the second duration after the first SBP procedure is terminated, that is, initiate a new SBP procedure to the second apparatus after the second duration after the first SBP procedure is terminated. In this way, the SBP responder may flexibly adjust, according to a service requirement of the SBP responder or the like, time for re-participating in establishing an SBP procedure. The SBP initiator can determine an intent of the SBP responder by using the third indication information, thereby avoiding resource consumption caused because the SBP initiator does not know the intent of the SBP responder and initiates an SBP procedure to the SBP responder within the second duration after the first SBP procedure is terminated.

For another example, if the third indication information indicates that the second apparatus does not send the third message to the first apparatus within the second duration after the first SBP procedure is terminated, based on the third indication information, the first apparatus may respond, within the second duration after the first SBP procedure is terminated, to an SBP procedure establishment request initiated by another SBP initiator (an SBP initiator other than the second apparatus). In this way, the SBP initiator may flexibly adjust time for establishing an SBP procedure with each SBP responder. This can increase fairness of initiating an SBP procedure by the SBP initiator in a communication environment in which there are a plurality of SBP responders. The SBP responder can determine an intent of the SBP initiator by using the third indication information, to respond, within the second duration after the first SBP procedure is terminated, to an SBP procedure establishment request initiated by another SBP initiator.

For another example, if the third indication information indicates that the second apparatus no longer participates in an SBP procedure after the first SBP procedure is terminated, based on the third indication information, the first apparatus may no longer send the third message to the second apparatus after the first SBP procedure is terminated, that is, no longer initiate a new SBP procedure to the second apparatus after the first SBP procedure is terminated. In this way, the SBP responder may determine not to participate in an SBP procedure according to a situation of the SBP responder; and based on the third indication information, the SBP initiator may no longer send the third message to the SBP responder after the first SBP procedure is terminated, thereby avoiding resource consumption caused because the SBP initiator does not know that the SBP responder no longer participates in an SBP procedure and still sends the third message to the SBP responder.

The following describes a specific implementation in the scenario 2_2 with reference to S901B and S902B.

S901B: The second apparatus sends a fourth message to the first apparatus.

Correspondingly, the first apparatus receives the fourth message from the second apparatus.

The fourth message may include third indication information. In the scenario 2_2, the third indication information may indicate that the second apparatus does not send a third message to the first apparatus within second duration after a first SBP procedure is terminated. For details, refer to the foregoing content. Details are not described again. Correspondingly, the first apparatus may be an SBP responder, and the second apparatus may be an SBP initiator.

In an implementation, the fourth message may further include fourth indication information. The fourth indication information may indicate that the fourth message includes the third indication information, or the fourth indication information may indicate that the fourth message does not include the third indication information. In this way, the first apparatus may determine, by parsing the fourth indication information, whether the fourth message includes the third indication information. In this embodiment of this application, an example in which the fourth indication information indicates that the fourth message includes the third indication information is used for description.

In the scenario 2_2, the fourth message may be used to request to establish the first SBP procedure. For example, the fourth message may be an SBP request (SBP request) frame, or the fourth message may be a DMG SBP request (DMG SBP request) frame.

In an implementation, for sensing (that is, sub-7 GHz sensing), the fourth message may be an SBP request frame, the SBP request frame may include a termination duration (termination duration) field, and the termination duration field is used to carry the third indication information. For example, the termination duration field may indicate the second duration. Specifically, the termination duration field may directly indicate the second duration, or the termination duration field may indicate the second duration in an exponential manner. This is not limited. Optionally, the termination duration field may be carried in an SBP parameters element (SBP parameters element) field in the SBP request frame. For example, the termination duration field may be carried in the SBP parameters control (SBP parameters control) field of the SBP parameters element field. This is not limited.

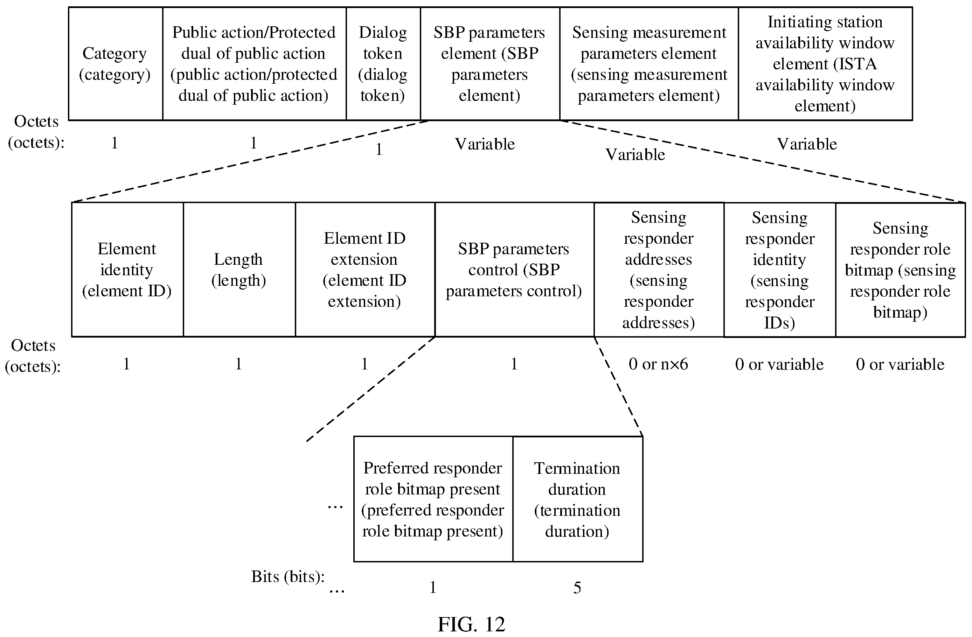

FIG. 12 is an example of a diagram of a structure of an SBP request frame according to an embodiment of this application. As shown in FIG. 12, the SBP request frame (that is, the fourth message) may include but is not limited to one or more of the following fields: category (category), public action/protected dual of public action (public action/protected dual of public action), dialog token (dialog token), SBP parameters element (SBP parameters element), sensing measurement parameters element (sensing measurement parameters element), and initiating station (initiating STA, ISTA) availability window element (ISTA availability window element). The SBP parameters element field may include but is not limited to one or more of the following fields: element identity (element ID), length (length), element ID extension (element ID extension), SBP parameters control (SBP parameters control), sensing responder addresses (sensing responder addresses), sensing responder identity (sensing responder IDs), and sensing responder role bitmap (sensing responder role bitmap). The SBP parameters control field may include but is not limited to one or more of the following subfields: preferred responder role bitmap present (preferred responder role bitmap present) and termination duration (termination duration).

For specific meanings of fields other than the termination duration field in FIG. 12, refer to related descriptions in the 802.11 series protocols. Details are not described herein.

It should be noted that a structure of an action field (action field) of the SBP request frame is merely an example, and this embodiment of this application is not limited thereto. For example, the termination duration field may be carried in the SBP parameters control field, or may not be carried in the SBP parameters control field, or may be located at any location of the action field (or an action field) of the SBP request frame. This is not limited. In addition, a field length of the termination duration field in FIG. 12 is merely an example. This is not limited in this embodiment of this application. For example, the field length of the termination duration field may be 5 bits as shown in the example in FIG. 12, or may be greater than 5 bits, or may be less than 5 bits. This is not limited.

Optionally, when the fourth message is the SBP request frame, the SBP request frame may further include a termination duration present (termination duration present) field, which is not shown in FIG. 12. The termination duration present field may be used to carry the fourth indication information, and the fourth indication information may indicate whether the SBP request frame includes the termination duration field. For details, similarly refer to the foregoing description of the termination duration indication present field. Details are not described again. It should be understood that a location of the termination duration present field in the SBP request frame and a field length of the termination duration present field are not limited in this embodiment of this application.

In an implementation, for DMG sensing, the fourth message may be a DMG SBP request frame, the DMG SBP request frame may include a termination duration (termination duration) field, and the termination duration field is used to carry the third indication information. For example, the termination duration field indicates the second duration. Specifically, the termination duration field may directly indicate the second duration, or the termination duration field may indicate the second duration in an exponential manner. This is not limited. Optionally, the termination duration field may be carried in a DMG SBP parameters element (DMG SBP parameters element) field in the DMG SBP request frame. It should be noted that the termination duration field may be located at any location of an action field (or an action field) of the DMG SBP request frame. This is not limited. In addition, a field length of the termination duration field is not limited in this embodiment of this application.

Optionally, when the fourth message is the DMG SBP request frame, the DMG SBP request frame may further include a termination duration present field. The termination duration present field may be used to carry the fourth indication information, and the fourth indication information may indicate whether the DMG SBP request frame includes the termination duration field. For details, similarly refer to the foregoing description of the termination duration indication present field. Details are not described again. It should be understood that a location of the termination duration present field in the SBP request frame and a field length of the termination duration present field are not limited in this embodiment of this application.

It should be noted that names of the foregoing fields are merely examples, and this embodiment of this application is not limited thereto. For example, the termination duration field may also be referred to as a termination time of duration field, an ending duration field, a termination time of duration indication field, a termination duration indication field, or the like. This is not limited. For another example, for DMG sensing, the termination duration field may also be referred to as a DMG termination duration field, a DMG termination time of duration field, a DMG termination time of duration indication field, a DMG termination duration indication field, a DMG ending duration field, or the like. This is not limited. For another example, for DMG sensing, the termination duration present field may also be referred to as a DMG termination duration present field, a DMG termination time of duration present field, a DMG termination duration indication present field, a DMG ending duration present field, or the like. This is not limited.

In the scenario 2_2, the second apparatus includes the third indication information in the SBP request frame (or the DMG SBP request frame) for sending to the first apparatus. The SBP request frame (or the DMG SBP request frame) is enhanced. This can optimize a time interaction problem in SBP procedure termination, and time for participating in a next SBP procedure after the first SBP procedure is terminated is more flexible.

Further, after receiving the fourth message, the first apparatus may send a response message for the fourth message to the second apparatus in response to the fourth message, that is, perform content of S902B.

S902B: The first apparatus sends the response message for the fourth message to the second apparatus.

Correspondingly, the second apparatus receives the response message for the fourth message from the first apparatus.

S902B is an optional step, and is represented by a dashed line in FIG. 9.

The response message for the fourth message may be used to respond to an establishment request for the first SBP procedure. The response message for the fourth message may indicate that establishment of the first SBP procedure is accepted, or indicate that establishment of the first SBP procedure is declined. In this embodiment of this application, an example in which establishment of the first SBP procedure is accepted is used for description. For example, the response message for the fourth message may be an SBP response (SBP response) frame, or the response message for the fourth message may be a DMG SBP response (DMG SBP response) frame.

After the first SBP procedure is successfully established, the first apparatus and the second apparatus may terminate the first SBP procedure based on an SBP procedure expiry exponent. For details, refer to the foregoing content. Details are not described again. Further, the second apparatus does not send the third message to the first apparatus within the second duration after the first SBP procedure is terminated, that is, does not initiate a new SBP procedure to the first apparatus within the second duration after the first SBP procedure is terminated. Optionally, the second apparatus may send the third message to the first apparatus after the second duration after the first SBP procedure is terminated, that is, initiate a new SBP procedure to the first apparatus after the second duration after the first SBP procedure is terminated. Based on the third indication information, the first apparatus may respond, within the second duration after the first SBP procedure is terminated, to an SBP procedure establishment request initiated by another SBP initiator. In this way, the SBP initiator may flexibly adjust time for establishing an SBP procedure with each SBP responder. This can increase fairness of initiating an SBP procedure by the SBP initiator in a communication environment in which there are a plurality of SBP responders. The SBP responder can determine an intent of the SBP initiator by using the third indication information, to respond, within the second duration after the first SBP procedure is terminated, to an SBP procedure establishment request initiated by another SBP initiator.

The following describes a specific implementation in the scenario 2_3 with reference to S901C and S902C.

S901C: The first apparatus sends a sixth message to the second apparatus.

Correspondingly, the second apparatus receives the sixth message from the first apparatus.

S901C is an optional step, and is represented by a dashed line in FIG. 9.

In the scenario 2_3, the sixth message may be used to request to establish a first SBP procedure. For example, the sixth message may be an SBP request (SBP request) frame, or the sixth message may be a DMG SBP request (DMG SBP request) frame. Correspondingly, the first apparatus may be an SBP initiator, and the second apparatus may be an SBP responder.

S902C: The second apparatus sends a fourth message to the first apparatus.

Correspondingly, the first apparatus receives the fourth message from the second apparatus.

The fourth message may include third indication information. In the scenario 2_3, the third indication information may indicate that the second apparatus requests the first apparatus not to send a third message to the second apparatus within second duration after the first SBP procedure is terminated; or the third indication information may indicate that the second apparatus no longer participates in an SBP procedure after the first SBP procedure is terminated. For details, refer to the foregoing content. Details are not described again.

In an implementation, the fourth message may include a fourth field, and the fourth field may be used to carry the third indication information, and indicate that the second apparatus no longer participates in an SBP procedure after the first SBP procedure is terminated. For example, the fourth field may be a quit SBP (quit SBP) field, or the fourth field may be a DMG quit SBP (DMG quit SBP) field. Specifically, a value of the fourth field may include a third value and a fourth value. The third value may indicate that the second apparatus no longer participates in an SBP procedure after the first SBP procedure is terminated, and the fourth value may indicate that the fourth field is reserved, that is, the fourth field is a reserved field. For example, a field length of the fourth field is 1 bit. The third value may be 0, and the fourth value may be 1; or the third value may be 1, and the fourth value may be 0. This is not limited. In this implementation, if the value of the fourth field is the third value, the third indication information may indicate that the second apparatus no longer participates in an SBP procedure after the first SBP procedure is terminated.

In another implementation, the fourth message may not include the fourth field, and the second duration is set to indicate that the second apparatus no longer participates in an SBP procedure after the first SBP procedure is terminated. For example, the second duration may be infinite, or the second duration may be a preset value, for example, a maximum value that can be indicated by the third indication information. In this case, the third indication information may indicate that the second apparatus no longer participates in an SBP procedure after the first SBP procedure is terminated.

In another implementation, if the third indication information indicates that the second apparatus requests the first apparatus not to send the third message to the second apparatus within the second duration after the first SBP procedure is terminated, the fourth message may further include a fourth field, that is, the fourth message may include the third indication information and the fourth field. A value of the fourth field may include a third value and a fourth value. For details, refer to the foregoing content. Details are not described again. In this implementation, the value of the fourth field is the fourth value. In this way, the third indication information may indicate that the second apparatus requests the first apparatus not to send the third message to the second apparatus within the second duration after the first SBP procedure is terminated.

In an implementation, the fourth message may further include fourth indication information. The fourth indication information may indicate that the fourth message includes the third indication information, or the fourth indication information may indicate that the fourth message does not include the third indication information. In this way, the first apparatus may determine, by parsing the fourth indication information, whether the fourth message includes the third indication information. In this embodiment of this application, an example in which the fourth indication information indicates that the fourth message includes the third indication information is used for description.

In the scenario 2_3, the fourth message may be used to respond to an establishment request for the first SBP procedure. For example, the fourth message is a response message for the sixth message. For example, the fourth message may be an SBP response (SBP response) frame, or the fourth message may be a DMG SBP response (DMG SBP response) frame.

In an implementation, for sensing (that is, sub-7 GHz sensing), the fourth message may be an SBP response frame, the SBP response frame may include a termination duration indication (termination duration indication) field, and the termination duration indication field is used to carry the third indication information. For example, the termination duration indication field may indicate the second duration. Specifically, the termination duration indication field may directly indicate the second duration, or the termination duration indication field may indicate the second duration in an exponential manner. For details, refer to the foregoing content. Details are not described again.

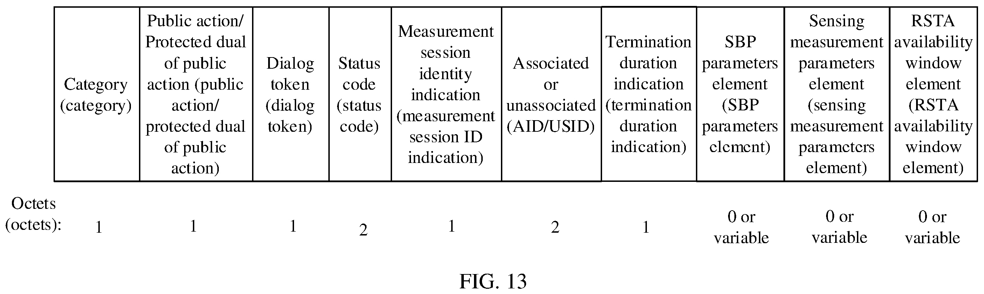

FIG. 13 is an example of a diagram of a structure of an SBP response frame according to an embodiment of this application. As shown in FIG. 13, the SBP response frame (that is, the fourth message) may include but is not limited to one or more of the following fields: category (category), public action/protected dual of public action (public action/protected dual of public action), dialog token (dialog token), status code (status code), measurement session identity indication (measurement session ID indication), associated ID (associated ID, AID) or unassociated ID (unassociated ID, USID), termination duration indication (termination duration indication), SBP parameters element (SBP parameters element), sensing measurement parameters element (sensing measurement parameters element), and responding station (responding STA, RSTA) availability window element (RSTA availability window element). The status code may also be referred to as a state machine. In addition, for specific meanings of fields other than the termination duration indication field in the SBP response frame shown in FIG. 13, refer to related descriptions in the 802.11 series protocols. Details are not described herein.

In an implementation, for DMG sensing, the fourth message may be a DMG SBP response frame, the DMG SBP response frame may include a DMG termination duration indication (DMG termination duration indication) field, and the DMG termination duration indication field is used to carry the third indication information. For example, the DMG termination duration indication field may indicate the second duration. Specifically, the DMG termination duration indication field may directly indicate the second duration, or the DMG termination duration indication field may indicate the second duration in an exponential manner. This is not limited.

In another implementation, for sensing (that is, sub-7 GHz sensing), the fourth message may be an SBP response frame, the SBP response frame may include a status code and a third field, and the status code and the third field may be used to carry the third indication information. The status code may also be referred to as a state machine. The third field may indicate the second duration. Specifically, the third field may directly indicate the second duration, or the third field may indicate the second duration in an exponential manner. For details, refer to the foregoing content. Details are not described again. Optionally, a field in the SBP response frame may be reused as the third field. For example, the third field may be referred to as a decline duration indication (decline duration indication) field, or may be referred to as a duration indication (duration indication) field, or may be referred to as a termination duration indication (termination duration indication) field. This is not limited.

For example, the SBP response frame may include one or more of the following:

The status code is success (SUCCESS). In this case, the third indication information may indicate that the second apparatus requests the first apparatus not to send the third message to the second apparatus within the second duration after the first SBP procedure is terminated.

The status code is declined (REQUEST_DECLINED). In this case, the third indication information may indicate that the second apparatus requests the first apparatus not to send the third message to the second apparatus within the second duration after establishment of the first SBP procedure is declined.

The status code is rejected with suggestion (REJECTED_WITH_SUGGESTED_CHANGES). In this case, the third indication information may indicate that the second apparatus requests the first apparatus not to send the third message to the second apparatus within the second duration after the first SBP procedure is terminated.

That the third indication information indicates that the second apparatus requests the first apparatus not to send the third message to the second apparatus within the second duration after establishment of the first SBP procedure is declined may be replaced with: the third indication information indicates the first apparatus not to send the third message to the second apparatus within the second duration after establishment of the first SBP procedure is declined; or may be replaced with: the third indication information indicates that the second apparatus requests the first apparatus to send the third message to the second apparatus after the second duration after establishment of the first SBP procedure is declined; or may be replaced with: the third indication information indicates the first apparatus to send the third message to the second apparatus after the second duration after establishment of the first SBP procedure is declined; or may be replaced with: the third indication information indicates that the second apparatus requests the first apparatus not to initiate a new SBP procedure within the second duration after establishment of the first SBP procedure is declined; or may be replaced with: the third indication information indicates the first apparatus not to initiate a new SBP procedure within the second duration after establishment of the first SBP procedure is declined; or may be replaced with: the third indication information indicates that the second apparatus requests the first apparatus not to initiate a new SBP procedure to the second apparatus within the second duration after establishment of the first SBP procedure is declined; or may be replaced with: the third indication information indicates the first apparatus not to initiate a new SBP procedure to the second apparatus within the second duration after establishment of the first SBP procedure is declined.

In this embodiment of this application, the status code in the SBP response frame is success (SUCCESS), or the status code in the SBP response frame is rejected with suggestion (REJECTED_WITH_SUGGESTED_CHANGES).

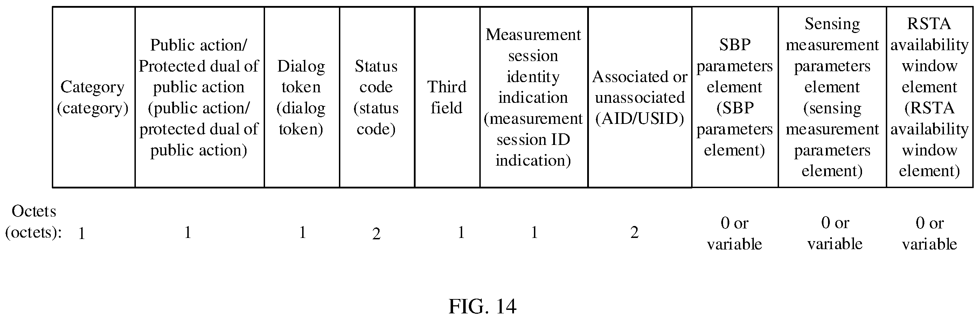

FIG. 14 is an example of a diagram of a structure of another SBP response frame according to an embodiment of this application. As shown in FIG. 14, the SBP response frame (that is, the fourth message) may include but is not limited to one or more of the following fields: category (category), public action/protected dual of public action (public action/protected dual of public action), dialog token (dialog token), status code (status code), third field, measurement session identity indication (measurement session ID indication), associated ID (association ID, AID) or unassociated ID (unassociated ID, USID), SBP parameters element (SBP parameters element), sensing measurement parameters element (sensing measurement parameters element), and responding station (responding STA, RSTA) availability window element (RSTA availability window element). For specific meanings of fields other than the status code and the third field in the SBP response frame shown in FIG. 14, refer to related descriptions in the 802.11 series protocols. Details are not described herein. In addition, a location of the third field in the SBP response frame and a field length of the third field are not limited in this embodiment of this application. Similarly, a location of the status code in the SBP response frame and a field length of the status code are not limited in this embodiment of this application.

In another implementation, for DMG sensing, the fourth message may be a DMG SBP response frame, the DMG SBP response frame may include a status code and a third field, and the status code and the third field may be used to carry the third indication information. The status code may also be referred to as a state machine. The third field may indicate the second duration. Specifically, the third field may directly indicate the second duration, or the third field may indicate the second duration in an exponential manner. For details, refer to the foregoing content. Details are not described again. Optionally, the third field may be referred to as a decline duration indication (decline duration indication) field, or may be referred to as a duration indication (duration indication) field, or may be referred to as a termination duration indication (termination duration indication) field, or the like. This is not limited.

For example, the DMG SBP response frame may include one or more of the following:
The status code is success (SUCCESS). In this case, the third indication information may indicate that the second apparatus requests the first apparatus not to send the third message to the second apparatus within the second duration after the first SBP procedure is terminated.

The status code is declined (REQUEST_DECLINED). In this case, the third indication information may indicate that the second apparatus requests the first apparatus not to send the third message to the second apparatus within the second duration after establishment of the first SBP procedure is declined.

The status code is rejected with suggestion (REJECTED_WITH_SUGGESTED_CHANGES). In this case, the third indication information may indicate that the second apparatus requests the first apparatus not to send the third message to the second apparatus within the second duration after the first SBP procedure is terminated.

The third indication information indicates that the second apparatus requests the first apparatus not to send the third message to the second apparatus within the second duration after establishment of the first SBP procedure is declined. For details, refer to the foregoing content. Details are not described again.

In this embodiment of this application, the status code in the DMG SBP response frame is success (SUCCESS), or the status code in the DMG SBP response frame is rejected with suggestion (REJECTED_WITH_SUGGESTED_CHANGES).

For example, when the fourth message is the DMG SBP response frame, the DMG SBP response frame may include but is not limited to one or more fields shown in Table 4.

**Table 4**

| Order (order) | Field name |
|---|---|
| 1 | Category (category) |
| 2 | Protected/unprotected DMG action (protected/unprotected DMG action) |
| 3 | Dialog token (dialog token) |
| 4 | DMG measurement session identity (DMG measurement session identity) |
| 5 | Status code (status code) |
| 6 | Third field (for example, a decline duration indication (decline duration indication) field) |
| 7 | DMG SBP parameters element (DMG SBP parameters element) |
| 8 | DMG sensing measurement session element (DMG sensing measurement session element) |
| 9 | DMG sensing image range axis look up table (look up table, LUT) (DMG sensing image range axis LUT) |
| 10 | DMG sensing image doppler axis look up table (DMG sensing image doppler axis LUT) |

For specific meanings of remaining fields other than the status code and the third field in Table 4, refer to related descriptions in the 802.11 series protocols. Details are not described herein. In addition, a location of the third field in the DMG SBP response frame and a field length of the third field are not limited in this embodiment of this application. Similarly, a location of the status code in the SBP response frame and a field length of the status code are not limited in this embodiment of this application.

Optionally, for sensing (that is, sub-7 GHz sensing), the fourth message may be an SBP response frame, and the SBP response frame may further include a termination duration indication present field, or may further include a quit SBP field, or may further include a termination duration indication present field and a quit SBP field, which are not shown in FIG. 13 or FIG. 14. For the termination duration indication present field and the quit SBP field, refer to the foregoing content. Details are not described again. In addition, a location of the termination duration indication present field in the SBP response frame and a field length of the termination duration indication present field are not limited in this embodiment of this application. Similarly, a location of the quit SBP field in the SBP response frame and a field length of the quit SBP field are not limited in this embodiment of this application.

Optionally, for DMG sensing, the fourth message may be a DMG SBP response frame, and the DMG SBP response frame may further include a DMG termination duration indication present field, or may further include a DMG quit SBP field, or may further include a DMG termination duration indication present field and a DMG quit SBP field, which are not shown in Table 4. For the DMG termination duration indication present field and the DMG quit SBP field, refer to the foregoing content. Details are not described again. In addition, a location of the DMG termination duration indication present field in the DMG SBP response frame and a field length of the DMG termination duration indication present field are not limited in this embodiment of this application. Similarly, a location of the DMG quit SBP field in the DMG SBP response frame and a field length of the DMG quit SBP field are not limited in this embodiment of this application.

In the scenario 2_3, the second apparatus includes the third indication information in the SBP response frame (or the DMG SBP response frame) for sending to the first apparatus. The SBP response frame (or the DMG SBP response frame) is enhanced. This can optimize a time interaction problem in SBP procedure termination, and time for participating in a next SBP procedure after the first SBP procedure is terminated is more flexible.

After the first SBP procedure is successfully established, the first apparatus and the second apparatus may terminate the first SBP procedure based on an SBP procedure expiry exponent. For details, refer to the foregoing content. Details are not described again. Further, if the third indication information indicates that the second apparatus requests the first apparatus not to send the third message to the second apparatus within the second duration after the first SBP procedure is terminated, based on the third indication information, the first apparatus may not send the third message to the second apparatus within the second duration after the first SBP procedure is terminated, that is, not initiate a new SBP procedure to the second apparatus within the second duration after the first SBP procedure is terminated. Optionally, based on the third indication information, the first apparatus may send the third message to the second apparatus after the second duration after the first SBP procedure is terminated, that is, initiate a new SBP procedure to the second apparatus after the second duration after the first SBP procedure is terminated. In this way, the SBP responder may flexibly adjust, according to a service requirement of the SBP responder or the like, time for re-participating in establishing an SBP procedure. The SBP initiator can determine an intent of the SBP responder by using the third indication information, thereby avoiding resource consumption caused because the SBP initiator does not know the intent of the SBP responder and initiates an SBP procedure to the SBP responder within the second duration after the first SBP procedure is terminated.

If the third indication information indicates that the second apparatus no longer participates in an SBP procedure after the first SBP procedure is terminated, based on the third indication information, the first apparatus may no longer send the third message to the second apparatus after the first SBP procedure is terminated, that is, no longer initiate a new SBP procedure to the second apparatus after the first SBP procedure is terminated. In this way, the SBP responder may determine not to participate in an SBP procedure according to a situation of the SBP responder; and based on the third indication information, the SBP initiator may no longer send the third message to the SBP responder after the first SBP procedure is terminated, thereby avoiding resource consumption caused because the SBP initiator does not know that the SBP responder no longer participates in an SBP procedure and still sends the third message to the SBP responder.

The embodiment shown in FIG. 9 optimizes a time problem in SBP procedure termination. In another possible implementation, embodiments of this application provide another sensing method and a communication apparatus, to optimize a time interaction problem in declining establishment of an SBP procedure, so that time for participating in a next SBP procedure after establishment of the SBP procedure is declined is more flexible.

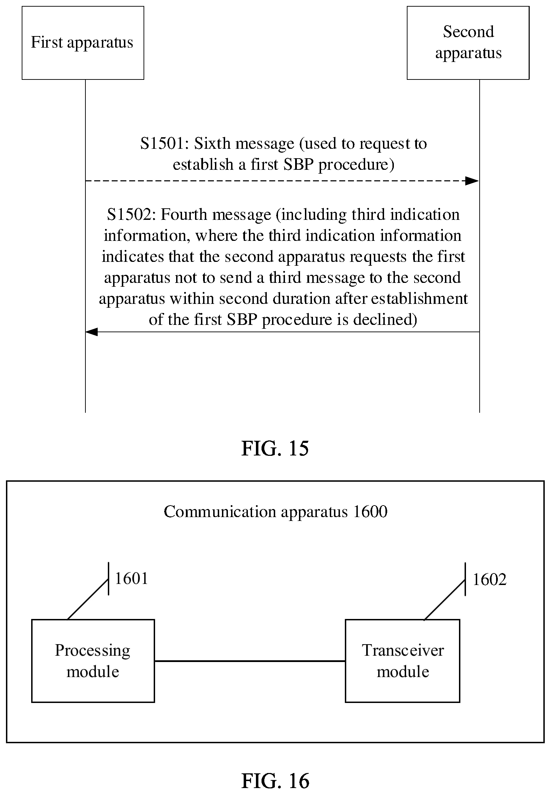

FIG. 15 is a schematic flowchart of another sensing method according to an embodiment of this application. When the method procedure provided in this embodiment of this application is applied to the system shown in FIG. 1, the AP or a chip in the AP or the STA or a chip in the STA in FIG. 1 may perform a method performed by a first apparatus in the following procedure, or the AP or a chip in the AP or the STA or a chip in the STA in FIG. 1 may perform a method performed by a second apparatus in the following procedure. It may be understood that a specific structure of an execution body of a method provided in embodiments of this application is not specifically limited in embodiments shown below, provided that a program that records code for the method provided in embodiments of this application can be run to perform communication according to the method provided in embodiments of this application. In addition, dashed lines in FIG. 15 indicate optional steps.

Compared with that in the embodiment shown in FIG. 9, third indication information in the embodiment shown in FIG. 15 may indicate that the second apparatus requests the first apparatus not to send a third message to the second apparatus within second duration after establishment of a first SBP procedure is declined. As shown in FIG. 15, the method may include the following content.

S1501: The first apparatus sends a sixth message to the second apparatus.

Correspondingly, the second apparatus receives the sixth message from the first apparatus.

S1501 is an optional step, and is represented by a dashed line in FIG. 15.

In this embodiment, the sixth message may be used to request to establish a first SBP procedure. For example, the sixth message may be an SBP request (SBP request) frame, or the sixth message may be a DMG SBP request (DMG SBP request) frame. Correspondingly, the first apparatus may be an SBP initiator, and the second apparatus may be an SBP responder. In an implementation, the SBP initiator may be an SBP initiator in sensing, and correspondingly, the SBP responder may be an SBP responder in sensing. In another implementation, the SBP initiator may alternatively be a DMG SBP initiator in DMG sensing, and correspondingly, the SBP responder may alternatively be a DMG SBP responder in DMG sensing. The first SBP procedure is an SBP procedure between the first apparatus and the second apparatus. For the first SBP procedure, refer to the foregoing content. Details are not described herein again.

S1502: The second apparatus sends a fourth message to the first apparatus.

Correspondingly, the first apparatus receives the fourth message from the second apparatus.

The fourth message may include third indication information. In this embodiment, the third indication information may indicate that the second apparatus requests the first apparatus not to send a third message to the second apparatus within second duration after establishment of the first SBP procedure is declined. That the third indication information indicates that the second apparatus requests the first apparatus not to send the third message to the second apparatus within the second duration after establishment of the first SBP procedure is declined may be replaced with: the third indication information indicates the first apparatus not to send the third message to the second apparatus within the second duration after establishment of the first SBP procedure is declined; or may be replaced with: the third indication information indicates that the second apparatus requests the first apparatus to send the third message to the second apparatus after the second duration after establishment of the first SBP procedure is declined; or may be replaced with: the third indication information indicates the first apparatus to send the third message to the second apparatus after the second duration after establishment of the first SBP procedure is declined; or may be replaced with: the third indication information indicates that the second apparatus requests the first apparatus not to initiate a new SBP procedure within the second duration after establishment of the first SBP procedure is declined; or may be replaced with: the third indication information indicates the first apparatus not to initiate a new SBP procedure within the second duration after establishment of the first SBP procedure is declined; or may be replaced with: the third indication information indicates that the second apparatus requests the first apparatus not to initiate a new SBP procedure to the second apparatus within the second duration after establishment of the first SBP procedure is declined; or may be replaced with: the third indication information indicates the first apparatus not to initiate a new SBP procedure to the second apparatus within the second duration after establishment of the first SBP procedure is declined.

The third message may be used to request to establish a second SBP procedure. The second SBP procedure is an SBP procedure between the first apparatus and the second apparatus. In other words, the third message may be used to request to establish the second SBP procedure between the first apparatus and the second apparatus. In an implementation, the second SBP procedure may be an SBP procedure in sensing, or the second SBP procedure may be a DMG SBP procedure in DMG sensing. This is not limited. The first SBP procedure and the second SBP procedure are different SBP procedures.

In an implementation, the fourth message may further include a fourth field, that is, the fourth message may include the third indication information and the fourth field. A value of the fourth field may include a third value and a fourth value. For details, refer to the foregoing content. Details are not described again. In this implementation, the value of the fourth field is the fourth value. In this way, the third indication information may indicate that the second apparatus requests the first apparatus not to send the third message to the second apparatus within the second duration after establishment of the first SBP procedure is declined.

In an implementation, the fourth message may further include fourth indication information. The fourth indication information may indicate that the fourth message includes the third indication information, or the fourth indication information may indicate that the fourth message does not include the third indication information. In this way, the first apparatus may determine, by parsing the fourth indication information, whether the fourth message includes the third indication information. In this embodiment of this application, an example in which the fourth indication information indicates that the fourth message includes the third indication information is used for description.

It should be noted that the term "SBP procedure" may be replaced with "SBP process", or may be replaced with "SBP session", or the like. This is not limited. The term "sending a third message" may be replaced with "initiating an SBP procedure", or may be replaced with "initiating a new SBP procedure", or the like. This is not limited. The term "request" may be replaced with "require", or may be replaced with "expect", or may be replaced with "allow", or the like. This is not limited.

In this embodiment, the fourth message may be used to respond to an establishment request for the first SBP procedure. For example, the fourth message is a response message for the sixth message. For example, the fourth message may be an SBP response (SBP response) frame in sensing, or the fourth message may be a DMG SBP response (DMG SBP response) frame in DMG sensing. Optionally, the fourth message may indicate that establishment of the first SBP procedure is declined.

In an implementation, for sensing (that is, sub-7 GHz sensing), the fourth message may be an SBP response frame, the SBP response frame may include a status code and a third field, and the status code and the third field may be used to carry the third indication information. The status code may also be referred to as a state machine. The third field may indicate the second duration. Specifically, the third field may directly indicate the second duration, or the third field may indicate the second duration in an exponential manner. For details, refer to related content shown in FIG. 9. Details are not described again. Optionally, the third field may be referred to as a decline duration indication (decline duration indication) field, or may be referred to as a duration indication (duration indication) field, or may be referred to as a termination duration indication (termination duration indication) field. This is not limited. In addition, for a structure of the SBP response frame, refer to the SBP response frame shown in FIG. 14.

For example, the SBP response frame may include one or more of the following:
The status code is success (SUCCESS). In this case, the third indication information may indicate that the second apparatus requests the first apparatus not to send the third message to the second apparatus within the second duration after the first SBP procedure is terminated.

The status code is declined (REQUEST_DECLINED). In this case, the third indication information may indicate that the second apparatus requests the first apparatus not to send the third message to the second apparatus within the second duration after establishment of the first SBP procedure is declined.

The status code is rejected with suggestion (REJECTED_WITH_SUGGESTED_CHANGES). In this case, the third indication information may indicate that the second apparatus requests the first apparatus not to send the third message to the second apparatus within the second duration after the first SBP procedure is terminated.

In this embodiment of this application, the status code in the SBP response frame is declined (REQUEST_DECLINED).

In another implementation, for DMG sensing, the fourth message may be a DMG SBP response frame, the DMG SBP response frame may include a status code and a third field, and the status code and the third field may be used to carry the third indication information. The status code may also be referred to as a state machine. The third field may indicate the second duration. Specifically, the third field may directly indicate the second duration, or the third field may indicate the second duration in an exponential manner. For details, refer to related content shown in FIG. 9. Details are not described again. Optionally, the third field may be referred to as a decline duration indication (decline duration indication) field, or may be referred to as a duration indication (duration indication) field, or may be referred to as a termination duration indication (termination duration indication) field, or the like. This is not limited. In addition, for a structure of the DMG SBP response frame, refer to the DMG SBP response frame shown in Table 4.

For example, the DMG SBP response frame may include one or more of the following:
The status code is success (SUCCESS). In this case, the third indication information may indicate that the second apparatus requests the first apparatus not to send the third message to the second apparatus within the second duration after the first SBP procedure is terminated.

The status code is declined (REQUEST_DECLINED). In this case, the third indication information may indicate that the second apparatus requests the first apparatus not to send the third message to the second apparatus within the second duration after establishment of the first SBP procedure is declined.

The status code is rejected with suggestion (REJECTED_WITH_SUGGESTED_CHANGES). In this case, the third indication information may indicate that the second apparatus requests the first apparatus not to send the third message to the second apparatus within the second duration after the first SBP procedure is terminated.

In this embodiment of this application, the status code in the DMG SBP response frame is declined (REQUEST_DECLINED).

Optionally, for sensing, the fourth message may be an SBP response frame, and the SBP response frame may further include a termination duration indication present field. For the termination duration indication present field, refer to the foregoing content. Details are not described again. In addition, a location of the termination duration indication present field in the SBP response frame and a field length of the termination duration indication present field are not limited in this embodiment of this application.

Optionally, for DMG sensing, the fourth message may be a DMG SBP response frame, and the DMG SBP response frame may further include a DMG termination duration indication present field. For the DMG termination duration indication present field, refer to the foregoing content. Details are not described again. In addition, a location of the DMG termination duration indication present field in the DMG SBP response frame and a field length of the DMG termination duration indication present field are not limited in this embodiment of this application.

In S1502, the second apparatus includes the third indication information in the SBP response frame (or the DMG SBP response frame) for sending to the first apparatus. The SBP response frame (or the DMG SBP response frame) is enhanced. This can optimize a time interaction problem in declining establishment of an SBP procedure, so that time for participating in a next SBP procedure after establishment of the first SBP procedure is declined is more flexible, and resource consumption caused by signaling exchange in an SBP procedure establishment process can be reduced.

According to the foregoing embodiment, the SBP responder may decline establishment of an SBP procedure according to a service requirement of the SBP responder or the like, and flexibly adjust time for re-participating in establishment of an SBP procedure. When the SBP initiator is rejected by the SBP responder, an intent of the SBP responder may be determined based on the third indication information, to avoid that the SBP initiator repeatedly initiates a plurality of SBP procedures in a case of being rejected, thereby reducing resource consumption caused by signaling exchange in an SBP procedure establishment process.

In embodiments provided in this application, the methods provided in embodiments of this application are separately described from a perspective of interaction between the first apparatus and the second apparatus. Steps performed by the first apparatus may be implemented by different functional entities that form the first apparatus. Steps performed by the second apparatus may be implemented by different functional entities that form the second apparatus. To implement functions in the foregoing method provided in embodiments of this application, the first apparatus and the second apparatus may include hardware structures and/or software modules, and the foregoing functions are implemented in a form of a hardware structure, a software module, or a combination of a hardware structure and a software module. Whether a function in the foregoing functions is performed in a manner of a hardware structure, a software module, or a hardware structure and a software module depends on specific applications and design constraints of the technical solutions.

The following describes communication apparatuses for implementing the foregoing methods in embodiments of this application with reference to the accompanying drawings. Therefore, all the foregoing content may be used in the following embodiments. Repeated content is not described again.

FIG. 16 is a diagram of a structure of a communication apparatus 1600. The communication apparatus 1600 may implement functions or steps implemented by the first apparatus or the second apparatus in the foregoing method embodiments.

In a possible implementation, the communication apparatus 1600 may include a processing module 1601 and a transceiver module 1602. The processing module 1601 may be configured to perform steps performed by any communication apparatus (for example, the first apparatus or the second apparatus) in any one of the foregoing method embodiments. The transceiver module 1602 may be configured to receive or send related data, information, or messages.

In another possible implementation, the communication apparatus 1600 may include a transceiver module 1602, and the transceiver module 1602 may be configured to perform steps or methods performed by any communication apparatus (for example, the first apparatus or the second apparatus) in any one of the foregoing method embodiments.

It should be noted that the foregoing units may be independently disposed, or may be partially or completely integrated. For example, the transceiver module 1602 may include a sending module and a receiving module.

In an example, the communication apparatus 1600 may implement functions or steps implemented by the first apparatus in any one of the foregoing method embodiments. The transceiver module 1602 is configured to receive first indication information or third indication information from the second apparatus. For details, refer to related content in the embodiment shown in any one of FIG. 2, FIG. 9, or FIG. 15. Details are not described again.

In another example, the communication apparatus 1600 may implement functions or steps implemented by the second apparatus in any one of the foregoing method embodiments. The transceiver module 1602 is configured to send first indication information or third indication information to the first apparatus. For details, refer to related content in the embodiment shown in any one of FIG. 2, FIG. 9, or FIG. 15. Details are not described again.

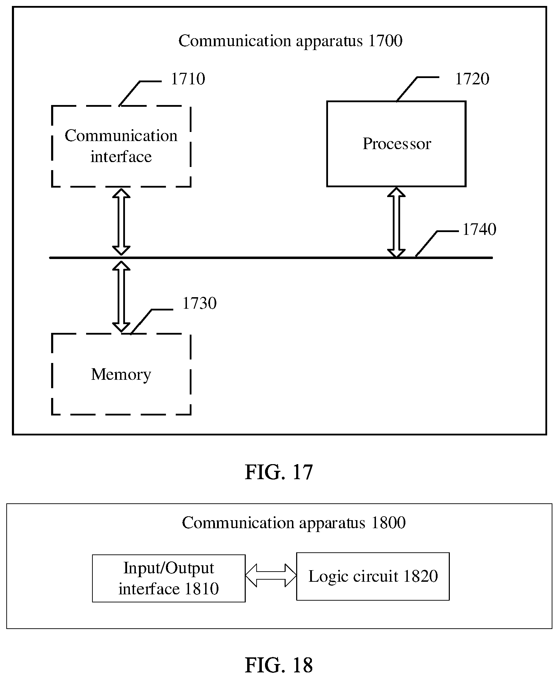

FIG. 17 is a diagram of a structure of a communication apparatus 1700 according to an embodiment of this application. The communication apparatus 1700 may include a processor 1720, configured to implement or support the communication apparatus 1700 in implementing functions of the first apparatus or the second apparatus in any method embodiment of this application. For details, refer to the detailed descriptions in the foregoing method embodiments. Details are not described herein again. For example, the processor 1720 is configured to: read program instructions through a communication interface, and execute the program instructions, so that the communication apparatus 1700 implements a corresponding method. The processor 1720 may include one or more processors. This is not limited.

Specifically, the communication apparatus 1700 may be the first apparatus or a functional module located in the first apparatus, and can implement a function of the first apparatus in any method embodiment of this application; or the communication apparatus 1700 may be the second apparatus or a functional module located in the second apparatus, and can implement a function of the second apparatus in any method embodiment of this application.

It should be noted that the foregoing functional module may be implemented by hardware, or may be implemented by a combination of the hardware and software. This is not limited.

For example, the communication apparatus 1700 may be a chip system. The chip system may include a chip, or may include a chip and another discrete component. This is not limited.

Optionally, the communication apparatus 1700 may further include a memory 1730, configured to store program instructions and/or data. The memory 1730 is coupled to the processor 1720. Coupling may be understood as an indirect coupling or a communication connection between apparatuses, units, or modules, may be in an electrical, mechanical, or another form, and is for information exchange between the apparatuses, the units, or the modules. The processor 1720 may cooperate with the memory 1730. The memory 1730 may include one or more memories. This is not limited.

Further, the processor 1720 is configured to execute the program instructions stored in the memory 1730, so that the communication apparatus 1700 implements a corresponding method.

The one or more memories in the memory 1730 may be included in the processor, or the memory 1730 may exist independently, for example, an off-chip memory, and is connected to the processor 1720 through a communication bus (represented by a bold line 1740 in FIG. 17). The memory 1730 may be alternatively integrated with the processor 1720.

Optionally, the communication apparatus 1700 further includes a communication interface 1710 (represented by a dashed line in FIG. 17), configured to communicate with another device by using a transmission medium, so that an apparatus in the communication apparatus 1700 may communicate with the another device. For example, when the communication apparatus is a first apparatus, the another device may be a second apparatus or the like. The processor 1720 may send and receive information through the communication interface 1710.

The communication interface 1710 may be specifically a transceiver. In a hardware implementation, the transceiver may be configured to implement a function of the transceiver module 1602, and the transceiver is integrated into the communication apparatus 1700 to constitute the communication interface 1710.

It should be noted that a specific connection medium between the communication interface 1710, the processor 1720, and the memory 1730 is not limited in this embodiment of this application. In FIG. 17, the memory 1730, the processor 1720, and the communication interface 1710 are connected through the communication bus 1740. A manner of connection between other components is merely an example for description, and is not limited thereto. The communication bus 1740 may be classified into an address bus, a data bus, a control bus, or the like. For ease of representation, only one bold line is used for representation in FIG. 17, but this does not mean that there is only one communication bus or only one type of communication bus.

In embodiments of this application, the processor 1720 may be a general-purpose processor, a digital signal processor, an application-specific integrated circuit, a field programmable gate array or another programmable logic device, a discrete gate or transistor logic device, or a discrete hardware component. The general-purpose processor may be a microprocessor, or may be any conventional processor or the like. The method disclosed with reference to embodiments of this application may be performed and completed by hardware in the processor, or may be performed and completed by a combination of hardware and software in the processor.

In embodiments of this application, the memory 1730 may be a non-volatile memory, such as a hard disk drive (hard disk drive, HDD) or a solid-state drive (solid-state drive, SSD), or may be a volatile memory (volatile memory), such as a random access memory (random access memory, RAM). Alternatively, the memory may be any other medium that is used to carry or store program code in a form of instructions or a data structure and that can be accessed by a computer, or may be a circuit, or any other apparatus that can implement a storage function, and is configured to store the program instructions and/or the data.

Based on the same concept, refer to FIG. 18. An embodiment of this application further provides another communication apparatus 1800, including an input/output interface 1810 and a logic circuit 1820. The input/output interface 1810 is configured to receive code instructions and transmit the code instructions to the logic circuit 1820. The logic circuit 1820 is configured to run the code instructions to perform the method performed by the first apparatus or the second apparatus in any one of the foregoing embodiments.

The following describes in detail operations performed when the communication apparatus is used in the first apparatus or the second apparatus.

In an optional implementation, the communication apparatus 1800 may be used in the first apparatus, to perform the method performed by the first apparatus, specifically, for example, the method performed by the first apparatus in the embodiment shown in any one of FIG. 2, FIG. 9, or FIG. 15. Details are not described herein again. The communication apparatus 1800 provided in this embodiment may be used in the first apparatus, to complete the method performed by the first apparatus. Therefore, for technical effects that can be achieved, refer to the foregoing method embodiments. Details are not described herein again.

In another optional implementation, the communication apparatus 1800 may be used in the second apparatus, to perform the method performed by the second apparatus, specifically, for example, the method performed by the second apparatus in the embodiment shown in any one of FIG. 2, FIG. 9, or FIG. 15. Details are not described herein again. The communication apparatus 1800 provided in this embodiment may be used in the second apparatus, to complete the method performed by the second apparatus. Therefore, for technical effects that can be achieved, refer to the foregoing method embodiments. Details are not described herein again.

An embodiment of this application further provides a communication system. The communication system may include one or more of the following: a first apparatus or a second apparatus. For the first apparatus or the second apparatus, refer to the descriptions in the foregoing method embodiments. Details are not described again.

An embodiment of this application further provides a computer-readable storage medium, including program instructions. When the program instructions are run on a computer, the computer is enabled to perform the method or the steps performed by any communication apparatus (for example, the first apparatus or the second apparatus) in the foregoing embodiments.

An embodiment of this application further provides a computer program product, including program instructions. When the program instructions are run on a computer, the computer is enabled to perform the method or the steps performed by any communication apparatus (for example, the first apparatus or the second apparatus) in the foregoing embodiments.

An embodiment of this application provides a chip system. The chip system includes a processor, configured to implement the function (for example, perform a corresponding method or step) of the first apparatus or the second apparatus in the foregoing method. The chip system may include a chip, or may include a chip and another discrete component.

Optionally, the chip system further includes a memory, and the memory is configured to store program instructions, so that the processor reads and executes the program instructions, to implement the corresponding method.

It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the contributing part, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A sensing method, wherein the method is applied to a first apparatus and comprises:
receiving a second message from a second apparatus, wherein the second message comprises a status code and a first field, the first field indicates first duration, and when the status code is declined, the status code and the first field indicate that the second apparatus requests the first apparatus not to send a first message to the second apparatus within the first duration after the second apparatus declines establishment of a first sensing measurement session, wherein
the first sensing measurement session is a sensing measurement session between the first apparatus and the second apparatus, and the first message is used by the first apparatus to request to establish a second sensing measurement session.

2. The method according to claim 1, wherein the second message is used to request to terminate the first sensing measurement session, or the second message is used to respond to an establishment request for the first sensing measurement session, or the second message is used to request to establish the first sensing measurement session.

3. The method according to claim 1 or 2, wherein when the status code is success, or the status code is rejected with suggestion, the status code and the first field indicate that the second apparatus requests the first apparatus not to send the first message to the second apparatus within the first duration after the first sensing measurement session is terminated.

4. The method according to claim 3, wherein the second message further comprises a second field, a value of the second field comprises a first value and a second value, the first value indicates that the second apparatus no longer participates in a sensing measurement session after the first sensing measurement session is terminated, and the second value indicates that the second field is reserved.

5. The method according to any one of claims 1 to 4, wherein the second message is a sensing measurement response frame, and the first field is a decline duration indication field.

6. A sensing method, wherein the method is applied to a second apparatus and comprises:
sending a second message to a first apparatus, wherein the second message comprises a status code and a first field, the first field indicates first duration, and when the status code is declined, the status code and the first field indicate that the second apparatus requests the first apparatus not to send a first message to the second apparatus within the first duration after the second apparatus declines establishment of a first sensing measurement session, wherein
the first sensing measurement session is a sensing measurement session between the first apparatus and the second apparatus, and the first message is used by the first apparatus to request to establish a second sensing measurement session.

7. The method according to claim 6, wherein the second message is used to request to terminate the first sensing measurement session, or the second message is used to respond to an establishment request for the first sensing measurement session, or the second message is used to request to establish the first sensing measurement session.

8. The method according to claim 6 or 7, wherein when the status code is success, or the status code is rejected with suggestion, the status code and the first field indicate that the second apparatus requests the first apparatus not to send the first message to the second apparatus within the first duration after the first sensing measurement session is terminated.

9. The method according to claim 8, wherein the second message further comprises a second field, a value of the second field comprises a first value and a second value, the first value indicates that the second apparatus no longer participates in a sensing measurement session after the first sensing measurement session is terminated, and the second value indicates that the second field is reserved.

10. The method according to any one of claims 6 to 9, wherein the second message is a sensing measurement response frame, and the first field is a decline duration indication field.

11. A sensing method, wherein the method is applied to a first apparatus and comprises:
receiving a fourth message from a second apparatus, wherein the fourth message comprises a status code and a third field, the third field indicates second duration, and when the status code is declined, the status code and the third field indicate that the second apparatus requests the first apparatus not to send a third message to the second apparatus within the second duration after the second apparatus declines establishment of a first sensing by proxy procedure, wherein
the first sensing by proxy procedure is a sensing by proxy procedure between the first apparatus and the second apparatus, and the third message is used by the first apparatus to request to establish a second sensing by proxy procedure.

12. The method according to claim 11, wherein the fourth message is used to request to terminate the first sensing by proxy procedure, or the fourth message is used to respond to an establishment request for the first sensing by proxy procedure, or the fourth message is used to request to establish the first sensing by proxy procedure.

13. The method according to claim 11 or 12, wherein when the status code is success, or the status code is rejected with suggestion, the status code and the third field indicate that the second apparatus requests the first apparatus not to send the third message to the second apparatus within the second duration after the first sensing by proxy procedure is terminated.

14. The method according to claim 13, wherein the fourth message further comprises a fourth field, a value of the fourth field comprises a third value and a fourth value, the third value indicates that the second apparatus no longer participates in a sensing by proxy procedure after the first sensing by proxy procedure is terminated, and the fourth value indicates that the fourth field is reserved.

15. The method according to any one of claims 11 to 14, wherein the fourth message is a sensing by proxy response frame, and the third field is a decline duration indication field.

16. A sensing method, wherein the method is applied to a second apparatus and comprises:
sending a fourth message to a first apparatus, wherein the fourth message comprises a status code and a third field, the third field indicates second duration, and when the status code is declined, the status code and the third field indicate that the second apparatus requests the first apparatus not to send a third message to the second apparatus within the second duration after the second apparatus declines establishment of a first sensing by proxy procedure, wherein
the first sensing by proxy procedure is a sensing by proxy procedure between the first apparatus and the second apparatus, and the third message is used by the first apparatus to request to establish a second sensing by proxy procedure.

17. The method according to claim 16, wherein the fourth message is used to request to terminate the first sensing by proxy procedure, or the fourth message is used to respond to an establishment request for the first sensing by proxy procedure, or the fourth message is used to request to establish the first sensing by proxy procedure.

18. The method according to claim 16 or 17, wherein when the status code is success, or the status code is rejected with suggestion, the status code and the third field indicates that the second apparatus requests the first apparatus not to send the third message to the second apparatus within the second duration after the first sensing by proxy procedure is terminated.

19. The method according to claim 18, wherein the fourth message further comprises a fourth field, a value of the fourth field comprises a third value and a fourth value, the third value indicates that the second apparatus no longer participates in a sensing by proxy procedure after the first sensing by proxy procedure is terminated, and the fourth value indicates that the fourth field is reserved.

20. The method according to any one of claims 16 to 19, wherein the fourth message is a sensing by proxy response frame, and the third field is a decline duration indication field.

21. A communication apparatus, wherein the communication apparatus comprises a module for performing the method according to any one of claims 1 to 5, or a module for performing the method according to any one of claims 6 to 10, or a module for performing the method according to any one of claims 11 to 15, or a module for performing the method according to any one of claims 16 to 20.

22. A communication apparatus, comprising at least one processor and a memory, wherein the memory is configured to store one or more computer programs or instructions, and the at least one processor is configured to execute the one or more computer programs or instructions stored in the memory, to enable the communication apparatus to perform the method according to any one of claims 1 to 20.

23. A chip system, wherein the chip system comprises at least one processor, and the at least one processor is coupled to a memory, and is configured to execute one or more computer programs or instructions in the memory, to implement the method according to any one of claims 1 to 20.

24. A communication system, comprising a first apparatus and a second apparatus, wherein the first apparatus is configured to perform the method according to any one of claims 1 to 5, and the second apparatus is configured to perform the method according to any one of claims 6 to 10; or the first apparatus is configured to perform the method according to any one of claims 11 to 15, and the second apparatus is configured to perform the method according to any one of claims 16 to 20.

25. A computer-readable storage medium, storing a computer program or instructions, wherein the computer program or the instructions are used to implement the method according to any one of claims 1 to 20.

26. A computer program product, wherein the computer program product comprises a computer program, and when the computer program is run on a computer, the method according to any one of claims 1 to 20 is implemented.
